# EUROPEAN PATENT APPLICATION

(11) **EP 3 190 558 A1**
(43) Date of publication of application: **12.07.2017**
(21) Application number: 15838984.1
(22) Date of filing: 13.08.2015
(51) Int. Cl.: G06Q 20/34, G06Q 20/20, H04L 9/16

(54) **PAYMENT SYSTEM**

(30) Priority: 05.09.2014 CN 201410451653; 05.09.2014 CN 201410451651; 05.09.2014 CN 201410451752
(71) Applicant: Kuang-Chi Intelligent Photonic Technology Ltd., Shenzhen, Guangdong 518000 (CN)
(72) Inventor: LIU, Ruopeng, Shenzhen Guangdong 518057 (CN); WANG, Xudong, Shenzhen Guangdong 518057 (CN); FAN, Linyong, Shenzhen Guangdong 518057 (CN); XIAO, Guangjin, Shenzhen Guangdong 518057 (CN)
(74) Representative: Goddar, Heinz J.
(86) International application number: PCT/CN2015/086824
(87) International publication number: WO 2016/034032

(57) **Abstract**

The present application discloses a payment system to enhance security of the entire payment system and ensure fund security in a payment process. The technical solution is: in the entire payment system, designing encryption and decryption solutions at a payment end, a consumer end, and an account management server end separately; performing hierarchical encryption on data transmission and storage, and verifying legality of a hardware device of an access system. Compared with a conventional magnetic card payment mode and an online payment mode with a third-party account such as Alipay, the technical solution of the present application improves convenience and security to different extents.

## Description

### TECHNICAL FIELD

The present application relates to a payment system, and in particular, to an encryption and decryption system applied to a payment environment.

### BACKGROUND

Currently, a consumer may perform settlement by swiping a bank card (for example, a credit card, a debit card, or a third-party bank card) on a POS end when making a payment for a transaction. This conventional "card swiping" payment method prevents the consumer from carrying plenty of cash, but the consumer still needs to carry the bank card in order to make a payment by swiping a card, which restricts the payment for a transaction.

In addition, a medium used for the card swiping is a magnetic stripe card. The magnetic stripe card uses liquid magnetic material or magnetic stripe as an information carrier, and the card is coated with the liquid magnetic material, or a magnetic strip that is about 614 mm wide is affixed onto on the card by pressing. The magnetic stripe card is generally used as an identification card, in which information content can be written, stored, and rewritten.

However, an information storage capacity of a magnetic stripe card is small, the magnetic stripe is easy to read and fake, which leads to poor security. Especially, with the problem of poor security and vulnerability to fake, a criminal can steal information in the card by buying a device at a cost of only hundreds of yuan without requiring advanced knowledge or skill.

In addition to the payment method of card swiping, a payment method with an electronic wallet is popularized rapidly, for example, an "Alipay" electronic wallet. In the payment method with an electronic wallet, an application app is installed at a mobile phone end, and an electronic wallet account (Alipay account) is generated in a process of registering an account. A user may use a bank card to recharge the Alipay account beforehand. To make a payment in a subsequent consumption process, an amount is deducted from a balance of the Alipay account.

The electronic wallet transaction mode such as Alipay has many disadvantages. For example, a smooth Internet environment is required. The transaction depends on a communication network, and requires an Internet access. When the Internet is not smooth or the Internet is lacking of speed, the transaction tends to fail. Secondly, a security problem exists. Both an account number and a password of an electronic account are transmitted on the Internet, and are vulnerable to interception by a malicious user. Especially, when account information is transmitted in a WiFi network, the information is easier to steal. Moreover, a security system of the Alipay is defective, and information such as account information and a payment password of the Alipay is encrypted and authenticated on only an Alipay server, and currently depends on authentication manners such as mobile phone short message authentication or USB key authentication. The security system is not hierarchical enough.

### SUMMARY

The following gives an overview of one or more aspects to provide a basic understanding of the aspects. This overview is neither a detailed description on all conceived aspects, nor intended to specify key or decisive elements of all aspects or intended to define the scope of any aspect or all aspects. The only objective of the overview is to give concepts in one or more aspects in a simplified manner to serve as a preamble of subsequent detailed description.

The present application aims to resolve the foregoing problem, and provides a payment system to enhance security of the entire payment system and ensure fund security in a payment process.

The present application discloses a payment system, including a payment end, a consumer end, and an account management server, where
the payment end further includes:
a signal modulation module, which modulates information required for payment into a transmission signal and sends the transmission signal to the consumer end;
the consumer end further includes a signal receiving unit, and the signal receiving unit further includes:
   a signal conversion module, which converts the transmission signal sent by the payment end to the consumer end into an electric signal, and transmits the electric signal to the account management server;
   the account management server further includes:
a signal demodulation module, which receives the electric signal and performs demodulation to obtain the information required for payment.
The present application further discloses a payment system, including a payment end, a consumer end, and an account management server, where
the payment end further includes:
   a signal modulation module, which modulates information required for payment into a transmission signal and sends the transmission signal to the consumer end;
   the consumer end further includes a signal receiving unit, and the signal receiving unit further includes:
      a signal conversion module, which converts the transmission signal sent by the payment end to the consumer end into an electric signal;
      a signal demodulation module, which further demodulates the electric signal to obtain the information required for payment.

The present application further discloses a chip legality verification apparatus, including:
an identifier collection module, which collects an actual identifier of a chip and uploads the actual identifier to a server;
an identifier management module, which stores a legal identifier of the chip in the server; and
a legality verification module, which is connected to the identifier collection module and the identifier management module, and compares the collected actual identifier with the legal identifier in the identifier management module to determine whether the chip is legal.

The present application further discloses a dynamic key apparatus, including:
a key generation module, which generates a unique key each time, and delivers the key to a receiving device.

The present application further discloses a dynamic key apparatus, including:
a key generation module, which generates a set of keys at a time; and
a key selection module, which is connected to the key generation module, and selects at least one key from the set of keys and delivers the key to a receiving device.

The present application further discloses a dynamic key apparatus, including:
a key generation module, which generates a set of keys each time; and
a key selection module, which is connected to the key generation module, and selects at least one key from the set of keys generated each time and delivers the key to a receiving device.

The present application further discloses a dynamic key apparatus, including:
a key generation module, which generates a set of keys according to a preset rule and delivers the keys to a receiving device, whereupon the receiving device selects at least one key from the set of keys when needing to use the key, where the preset rule is generated periodically or generated after the Internet is accessed or generated after payment is made for a preset quantity of times.

According to an embodiment of a dynamic key apparatus of the present application, the dynamic key apparatus is disposed in a server or a receiving device.

Compared with the prior art, the present application brings the following beneficial effects: In the entire payment system, the present application designs encryption and decryption solutions at a payment end (mobile phone), a consumer end (POS machine), and an account management server end separately, performs hierarchical encryption and decryption on transmission and storage of data (especially data of a high security level, for example, transaction data, account information, and password), and verifies legality of a hardware device (for example, a signal receiving unit) of an access system. Compared with a conventional magnetic card payment mode and an online payment mode with a third-party account such as Alipay, the technical solution of the present application improves convenience and security to different extents.

### BRIEF DESCRIPTION OF DRAWINGS

FIG. 1a is a schematic diagram of an exemplary embodiment of a payment system according to the present application;
FIG. 1b is a schematic diagram of another embodiment of a payment system according to the present application;
FIG. 1c is a schematic diagram of another embodiment of a payment system according to the present application;
FIG. 2 is a brief schematic diagram of a payment system;
FIG. 3a is a schematic diagram of another embodiment of a payment system according to the present application;
FIG. 3b is a schematic diagram of another embodiment of a payment system according to the present application;
FIG. 3c is a schematic diagram of another embodiment of a payment system according to the present application;
FIG. 4a is a schematic diagram of another embodiment of a payment system according to the present application;
FIG. 4b is a schematic diagram of another embodiment of a payment system according to the present application;
FIG. 4c is a schematic diagram of another embodiment of a payment system according to the present application;
FIG. 5a is a schematic diagram of another embodiment of a payment system according to the present application;
FIG. 5b is a schematic diagram of another embodiment of a payment system according to the present application;
FIG. 5c is a schematic diagram of another embodiment of a payment system according to the present application;
FIG. 6a is a schematic diagram of another embodiment of a payment system according to the present application;
FIG. 6b is a schematic diagram of another embodiment of a payment system according to the present application;
FIG. 6c is a schematic diagram of another embodiment of a payment system according to the present application;
FIG. 7a is a schematic diagram of another embodiment of a payment system according to the present application;
FIG. 7b is a schematic diagram of another embodiment of a payment system according to the present application;
FIG. 7c is a schematic diagram of another embodiment of a payment system according to the present application;
FIG. 8a is a schematic diagram of another embodiment of a payment system according to the present application;
FIG. 8b is a schematic diagram of another embodiment of a payment system according to the present application;
FIG. 8c is a schematic diagram of another embodiment of a payment system according to the present application;
FIG. 9a is a schematic diagram of another embodiment of a payment system according to the present application;
FIG. 9b is a schematic diagram of another embodiment of a payment system according to the present application;
FIG. 10a is a schematic diagram of another embodiment of a payment system according to the present application;
FIG. 10b is a schematic diagram of another embodiment of a payment system according to the present application;
FIG. 11a is a schematic diagram of another embodiment of a payment system according to the present application;
FIG. 11b is a schematic diagram of another embodiment of a payment system according to the present application;
FIG. 12a is a schematic diagram of another embodiment of a payment system according to the present application;
FIG. 12b is a schematic diagram of another embodiment of a payment system according to the present application;
FIG. 12c is a schematic diagram of another embodiment of a payment system according to the present application;
FIG. 13a is a schematic diagram of another embodiment of a payment system according to the present application;
FIG. 13b is a schematic diagram of another embodiment of a payment system according to the present application;
FIG. 13c is a schematic diagram of another embodiment of a payment system according to the present application;
FIG. 14a is a schematic diagram of another embodiment of a payment system according to the present application;
FIG. 14b is a schematic diagram of another embodiment of a payment system according to the present application;
FIG. 14c is a schematic diagram of another embodiment of a payment system according to the present application;
FIG. 15a is a schematic diagram of another embodiment of a payment system according to the present application;
FIG. 15b is a schematic diagram of another embodiment of a payment system according to the present application;
FIG. 15c is a schematic diagram of another embodiment of a payment system according to the present application;
FIG. 16a is a schematic diagram of another embodiment of a payment system according to the present application;
FIG. 16b is a schematic diagram of another embodiment of a payment system according to the present application;
FIG. 16c is a schematic diagram of another embodiment of a payment system according to the present application;
FIG. 17a is a schematic diagram of another embodiment of a payment system according to the present application;
FIG. 17b is a schematic diagram of another embodiment of a payment system according to the present application;
FIG. 17c is a schematic diagram of another embodiment of a payment system according to the present application;
FIG. 18a is a schematic diagram of another embodiment of a payment system according to the present application;
FIG. 18b is a schematic diagram of another embodiment of a payment system according to the present application;
FIG. 19 is a schematic diagram of an exemplary embodiment of a chip legality verification apparatus according to the present application;
FIG. 20 is a schematic diagram of an embodiment of a dynamic key apparatus according to the present application; and
FIG. 21 is a schematic diagram of another embodiment of a dynamic key apparatus according to the present application.

### DESCRIPTION OF EMBODIMENTS

The foregoing features and advantages of the present application can be better understood after detailed description of the disclosed embodiments is read with reference to the following accompanying drawings. In the accompanying drawings, components are not necessarily plotted proportionally, and components with similar related features or characteristics may have the same or similar marks in the accompanying drawings.

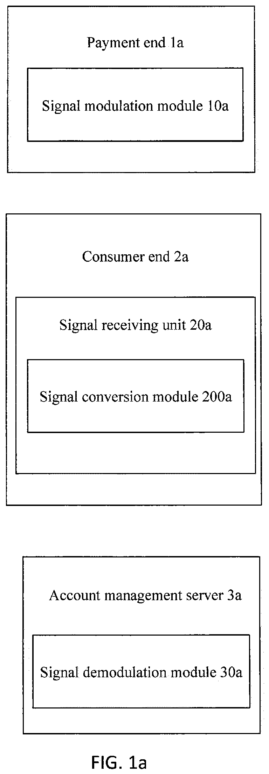

FIG. 1a is a schematic diagram of an exemplary embodiment of a payment system according to the present application. Referring to FIG. 1a, a payment system in this embodiment mainly includes three subsystems: a payment end, a consumer end, and an account management server.

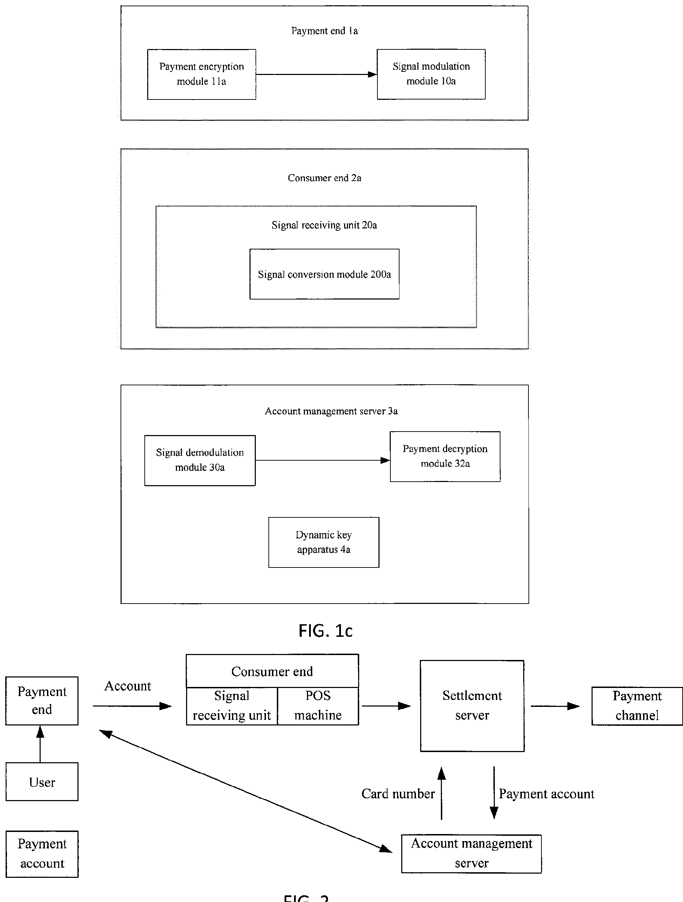

An encryption and decryption system of the present application is designed and implemented on a payment system shown in FIG. 2. A rough architecture of the payment system is shown in FIG. 2. The entire payment system mainly includes four components: a payment end, a consumer end, a settlement server, and an account management server. The consumer end is formed from two modules: a signal receiving unit and a POS machine.

Referring to FIG. 1a and FIG. 2, the following expounds the principles of the three subsystems of the encryption system.

The payment end 1a includes a signal modulation module 10a, which modulates information required for payment into a transmission signal and sends the transmission signal to the consumer end. There may be one type or more types of information required for payment. Specifically, for example, the information required for payment may be an account identifier, user information, payment account information, or account correlation information of a payment account, commodity name that needs payment, order number, or a payment amount or any combination thereof. The account identifier is allocated by the account management server based on the account information/account correlation information of the payment account/user information, and is used to distinguish between numerous users, and may be a string of digits or a numeral that includes other characters. Preferably, only one account identifier is allocated to each piece of account information/account correlation information of the payment account/user information. Nevertheless, when a user has many payment accounts, multiple account identifiers may be allocated to the user. The user information may include an identity card number of the user, a name, a social security card number, hardware identification information of the payment end, and the like. The payment account information may be payment bank card information of the user, payment bill information or payment voucher information. The account correlation information of the payment account may be correlated corresponding information of the payment account, and the corresponding payment account information may be found according to the account correlation information of the payment account. For example, the account correlation information of the payment account is a part of the payment account information, or a unique nickname corresponding to all payment account information, such as a log-in name of a professional/public version of each bank.

Information required in a payment phase generally includes the account identifier, user information, payment account information, or account correlation information of the payment account or the like. By means ofa mobile communication network or WiFi, the payment end may access the Internet/application to implement bidirectional communication with the account management server. Therefore, the payment end is enabled to query consumption information such as bonus points and discount vouchers.

The consumer end 2a includes a signal receiving unit 20a, and the signal receiving end includes a signal conversion module 200a. The signal conversion module 200a converts the transmission signal ,which is sent by the payment end to the consumer end, into an electric signal and transmits the electric signal to the account management server 3 a. The electric signal output by the consumer end includes the information required for payment that is sent by the payment end. The account management server 3a includes a signal demodulation module 30a. The signal demodulation module 30a receives the electric signal and performs demodulation to obtain the information required for payment.

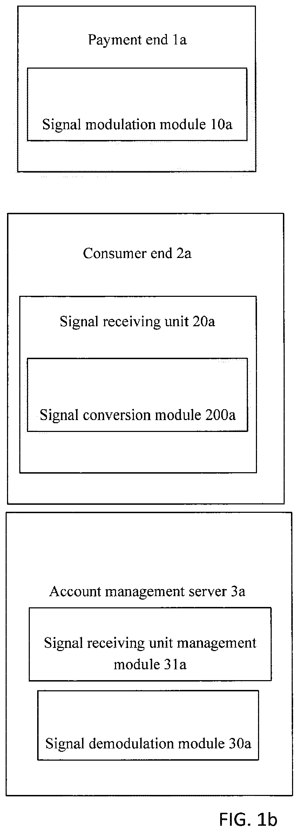

In addition, in a variable embodiment of the present application, as shown in FIG. 1b, a signal receiving unit management module 31a is disposed in the account management server 3a. The signal receiving unit management module 31a stores a legal identifier of the signal receiving unit 20a or information correlated with the identifier, compares the identifier and the information with an actual identifier of the signal receiving unit 20a or actual correlated information that is uploaded by the consumer end 2a, so as to determine whether a currently using signal receiving unit is legal.

The identifier of the signal receiving unit 20a includes a MAC address of the signal receiving unit, an IMEI of the consumer end, or an IMSI, or SIM card information or any combination thereof; or includes MAC address correlation information of the signal receiving unit, IMEI correlation information of the consumer end, IMSI correlation information, or SIM card correlation information or any combination thereof.

Further, in a variable embodiment of the present application, as shown in FIG. 1c, the payment end 1a includes a payment encryption module 11 a and a signal modulation module 10a. The payment encryption module 11a performs encryption before the information required for payment is modulated into the transmission signal, and then the encrypted information required for payment is modulated into the transmission signal by the signal modulation module 10a connected to the payment encryption module 11a, and sent to the consumer end.

The account management server 3a includes a signal demodulation module 30a and a payment decryption module 32a. The signal demodulation module 30a receives the electric signal and performs demodulation to obtain the information required for payment. The information required for payment, which is obtained after demodulation, is still encrypted. Therefore, the payment decryption module 32a connected after the signal demodulation module 30a needs to decrypt the demodulated information to obtain the original information required for payment.

In this embodiment, both the key used by the payment encryption module 11a for encryption and the key used by the payment decryption module 32a for decryption are generated by a dynamic key apparatus 4a in the account management server 3a, and the keys are dynamic keys.

The dynamic key apparatus 4a dynamically updates the key in four manners:
The first manner is that the dynamic key apparatus 4a generates a unique key each time, and delivers the key to the payment end/consumer end. The second manner is that the dynamic key apparatus 4a generates a set of keys at a time, and selects at least one key each time according to an algorithm and delivers the key to the payment end/consumer end. The third manner is that the dynamic key apparatus 4a generates a set of keys each time, and selects at least one of the keys each time according to an algorithm and delivers the key to the payment end/consumer end. The fourth manner is to generate a set of keys according to a preset rule and deliver the keys to the payment end/consumer end, whereupon the payment end/consumer end selects at least one key from the set of keys when needing to use the key, where the preset rule is generated periodically or generated after the Internet is accessed or generated after payment is made for a preset quantity of times.

In subsequent embodiments, the dynamic key apparatus may update the key dynamically also in the four manners.

In FIG. 1c, the dynamic key apparatus 4a is disposed in the account management server 3a. In addition, the dynamic key apparatus 4a may also be disposed at the payment end/consumer end locally (for example, in this embodiment, at the payment end 1a locally), and may also update the key in the fourth manners accordingly.

The first manner is that the dynamic key apparatus generates a unique key locally each time; the second manner is to generate a set of keys locally at a time, and select at least one of the keys each time according to an algorithm; the third manner is to generate a set of keys locally each time, and select at least one of the keys each time according to an algorithm; the fourth manner is to generate a set of keys locally according to a preset rule and select at least one key from the set of keys, where the preset rule is generated periodically or generated after the Internet is accessed or generated after payment is made for a preset quantity of times.

In subsequent embodiments, the dynamic key apparatus may set and update the key also in the four manners.

In this embodiment, the transmission signal sent by the payment end to the consumer end may be in multiple forms, including but not limited to a light signal, an acoustic signal, an infrared signal, or a radio frequency signal.

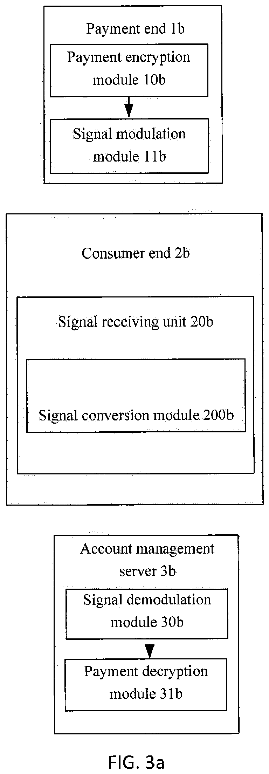

FIG. 3a is a schematic diagram of another embodiment of a payment system according to the present application. Referring to FIG. 3a and FIG. 2, the payment end 1b includes a payment encryption module 10b and a signal modulation module 11b. The payment encryption module 10b performs encryption before the information required for payment is modulated into the transmission signal, and then the encrypted information required for payment is modulated into the transmission signal by the signal modulation module 11b connected to the payment encryption module 10b, and sent to the consumer end.

The consumer end 2b includes a signal receiving unit 20b, and the signal receiving end includes a signal conversion module 200b. The signal conversion module 200b converts the transmission signal sent by the payment end to the consumer end into an electric signal and transmits the electric signal to the account management server 3b. The account management server 3b includes a signal demodulation module 30b and a payment decryption module 31b. The signal demodulation module 30b receives the electric signal transmitted by the signal conversion module 200b, and performs demodulation to obtain the information required for payment. In this embodiment, the demodulated information required for payment is still encrypted. Therefore, the payment decryption module 31b connected after the signal demodulation module 30b needs to decrypt the demodulated information to obtain the original information required for payment.

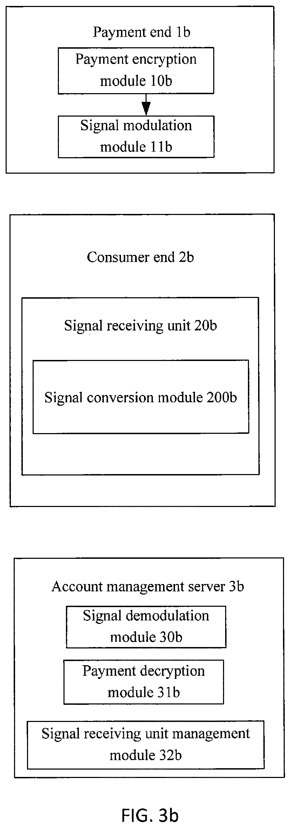

In addition, in a variable embodiment of the present application, as shown in FIG. 3b, a signal receiving unit management module 32b is disposed in the account management server 3b. The signal receiving unit management module 32b stores a legal identifier of the signal receiving unit 20b or information correlated with the identifier, compares the identifier and the information with an actual identifier of the signal receiving unit 20b or actual correlated information that is uploaded by the consumer end 2b, so as to determine whether a currently using signal receiving unit is legal.

The identifier of the signal receiving unit 20b includes a MAC address of the signal receiving unit, an IMEI of the consumer end, or an IMSI, or SIM card information or any combination thereof, or includes MAC address correlation information of the signal receiving unit, IMEI correlation information of the consumer end, IMSI correlation information, or SIM card correlation information or any combination thereof.

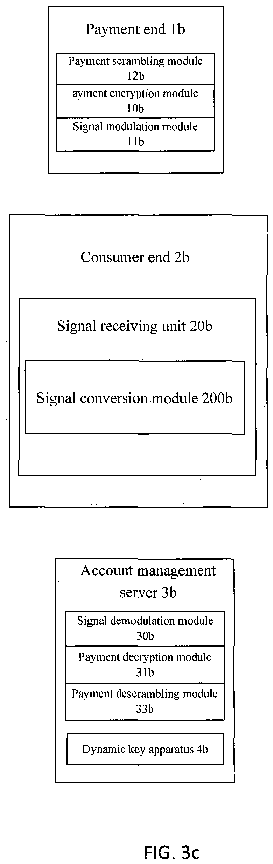

Further, FIG. 3c is a schematic diagram of another embodiment of a payment system based on a dynamic key according to the present application. In this embodiment, the payment end 1b includes a payment scrambling module 12b, a payment encryption module 10b, and a signal modulation module 11b. The payment scrambling module 12b is connected before the payment encryption module 10b, and scrambles the information required for payment before encryption. After the information is scrambled, the payment encryption module 10b encrypts the scrambled information. Then the signal modulation module 11b modulates the scrambled and encrypted information required for payment into a transmission signal and sends the transmission signal to the consumer end.

The account management server 3b includes a signal demodulation module 30b, a payment decryption module 31b, and a payment descrambling module 33b. The signal demodulation module 30b receives the electric signal transmitted by the signal conversion module 200b, and performs demodulation to obtain the information required for payment. In this embodiment, the demodulated information required for payment is still scrambled and encrypted. Therefore, the payment decryption module 31b connected after the signal demodulation module 30b needs to decrypt the demodulated information first, and then the payment descrambling module 33b connected after the payment decryption module 31b descrambles the decrypted information to finally obtain the original information required for payment.

The dynamic key apparatus 4b is disposed in the account management server 3b. The key may be updated dynamically in four manners, and the specific update manners are the same as or similar to the manners in the embodiment shown in FIG. 1c, and are not described herein again.

In FIG. 3c, the dynamic key apparatus 4b is disposed in the account management server 3b. In addition, the dynamic key apparatus 4b may also be disposed at the payment end/consumer end locally (for example, in this embodiment, at the payment end 1b locally), and may also update the key in the fourth manners accordingly. The specific update manners are the same as or similar to the manners in the embodiment shown in FIG. 1c, and are not described herein again.

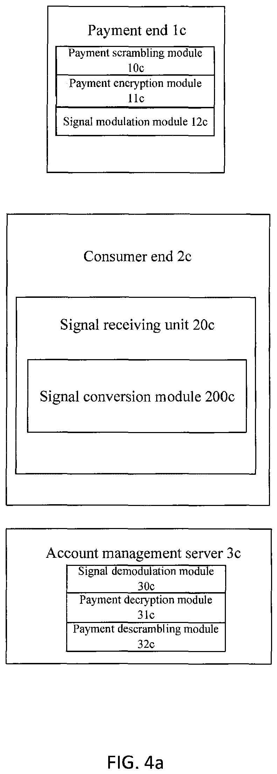

FIG. 4a is a schematic diagram of another embodiment of a payment system according to the present application. Referring to FIG. 4a and FIG. 2, in this embodiment, the payment end 1c includes a payment scrambling module 10c, a payment encryption module 11c, and a signal modulation module 12c. The payment scrambling module 10c is connected before the payment encryption module 11c, and scrambles the information required for payment before encryption. After the information is scrambled, the payment encryption module 11c encrypts the scrambled information. Then the signal modulation module 12c modulates the scrambled and encrypted information required for payment into a transmission signal and sends the transmission signal to the consumer end.

The consumer end 2c includes a signal receiving unit 20c, and the signal receiving end includes a signal conversion module 200c. The signal conversion module 200c converts the transmission signal sent by the payment end to the consumer end into an electric signal and transmits the electric signal to the account management server 3c.

The account management server 3c includes a signal demodulation module 30c, a payment decryption module 31c, and a payment descrambling module 32c. The signal demodulation module 30c receives the electric signal transmitted by the signal conversion module 200c, and performs demodulation to obtain the information required for payment. In this embodiment, the demodulated information required for payment is still scrambled and encrypted. Therefore, the payment decryption module 31c connected after the signal demodulation module 30c needs to decrypt the demodulated information first, and then the payment descrambling module 32c connected after the payment decryption module 31c descrambles the decrypted information to finally obtain the original information required for payment.

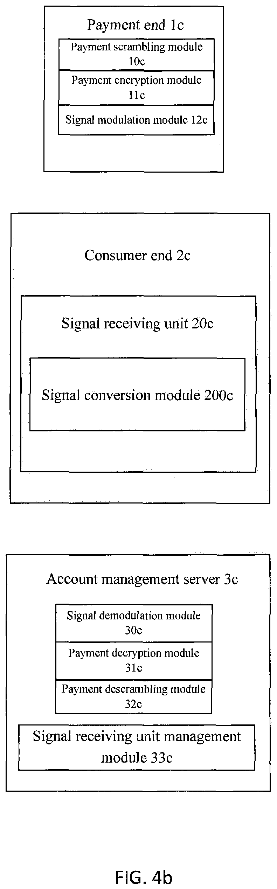

In addition, in a variable embodiment of the present application, as shown in FIG. 4b, a signal receiving unit management module 33c is disposed in the account management server 3c. The signal receiving unit management module 33c stores a legal identifier of the signal receiving unit 20c or information correlated with the identifier, compares the identifier and the information with an actual identifier of the signal receiving unit 20c or actual correlated information that is uploaded by the consumer end 2c, so as to determine whether a currently using signal receiving unit is legal.

The identifier of the signal receiving unit 20c includes a MAC address of the signal receiving unit, an IMEI of the consumer end, or an IMSI, or SIM card information or any combination thereof, or includes MAC address correlation information of the signal receiving unit, IMEI correlation information of the consumer end, IMSI correlation information, or SIM card correlation information or any combination thereof.

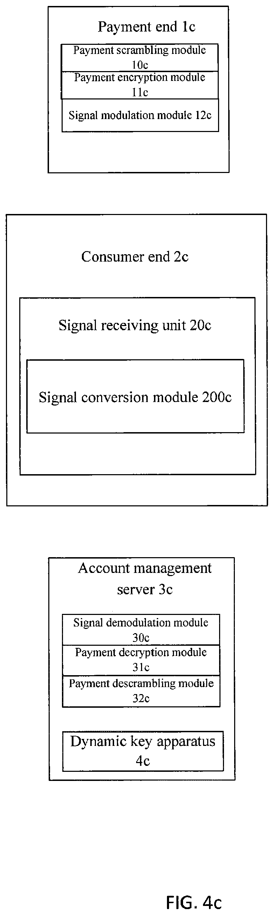

In another embodiment shown in FIG. 4c, the dynamic key apparatus 4c is disposed in the account management server 3c. The key may be updated dynamically in four manners, and the specific update manners are the same as or similar to the manners in the embodiment shown in FIG. 1c, and are not described herein again.

In FIG. 4c, the dynamic key apparatus 4c is disposed in the account management server 3c. In addition, the dynamic key apparatus 4c may also be disposed at the payment end/consumer end locally (for example, in this embodiment, at the payment end 1c locally), and may also update the key in the fourth manners accordingly. The specific update manners are the same as or similar to the manners in the embodiment shown in FIG. 1c, and are not described herein again.

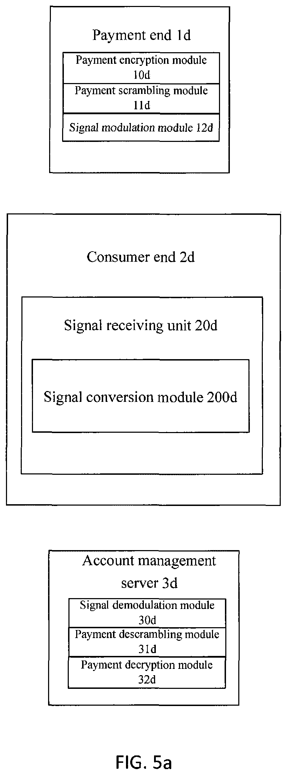

FIG. 5a is a schematic diagram of another embodiment of a payment system according to the present application. Referring to FIG. 5a and FIG. 2, in this embodiment, the payment end 1d includes a payment encryption module 10d, a payment scrambling module 11d, and a signal modulation module 12d. The payment encryption module 10d encrypts original information required for payment first, and then the payment scrambling module 11d connected between the payment encryption module 10d and the signal modulation module 12d scrambles the encrypted information required for payment. Then the signal modulation module 12d modulates the encrypted and scrambled information required for payment into a transmission signal and sends the transmission signal to the consumer end.

The consumer end 2b includes a signal receiving unit 20d, and the signal receiving end includes a signal conversion module 200d. The signal conversion module 200d converts the transmission signal ,which is sent by the payment end to the consumer end, into an electric signal and transmits the electric signal to the account management server 3d.

The account management server 3d includes a signal demodulation module 30d, a payment descrambling module 31d, and a payment decryption module 32d. The signal demodulation module 30d receives the electric signal transmitted by the signal conversion module 200d, and performs demodulation to obtain the information required for payment. In this embodiment, the demodulated information required for payment is still encrypted and scrambled. Therefore, the payment descrambling module 31d connected after the signal demodulation module 30d needs to descramble the demodulated information first, and then the payment decryption module 32d connected after the payment descrambling module 31 d decrypts the descrambled information to finally obtain the original information required for payment.

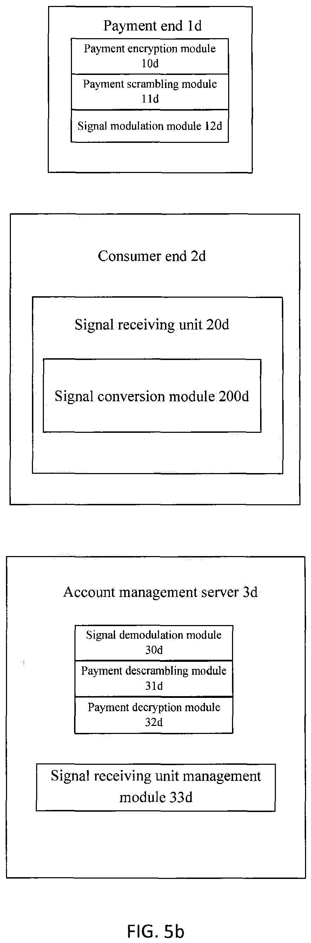

In addition, in a variable embodiment of the present application, as shown in FIG. 5b, a signal receiving unit management module 33d is disposed in the account management server 3d. The signal receiving unit management module 33d stores a legal identifier of the signal receiving unit 20d or information correlated with the identifier, compares the identifier and the information with an actual identifier of the signal receiving unit 20d or actual correlated information that is uploaded by the consumer end 2d, so as to determine whether a currently using signal receiving unit is legal.

The identifier of the signal receiving unit 20d includes a MAC address of the signal receiving unit, an IMEI of the consumer end, or an IMSI, or SIM card information or any combination thereof, or includes MAC address correlation information of the signal receiving unit, IMEI correlation information of the consumer end, IMSI correlation information, or SIM card correlation information or any combination thereof.

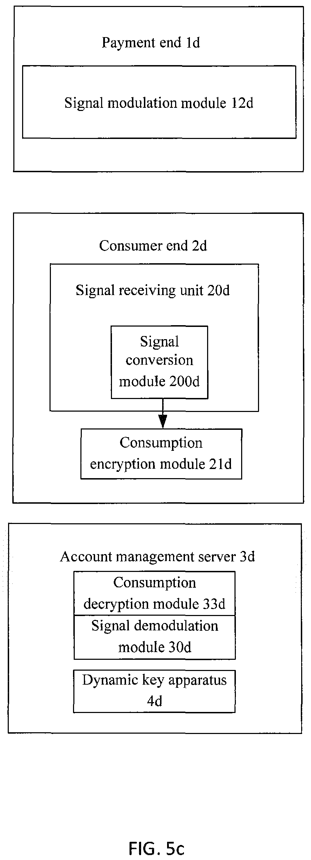

In another embodiment shown in FIG. 5c, the payment end 1d may include only a signal modulation module 12d, the consumer end 2d includes a signal receiving unit 20d and a consumption encryption module 21 d, the signal receiving unit further includes a signal conversion module 200d, and the signal conversion module 200d converts the transmission signal ,which is sent by the payment end to the consumer end, into an electric signal. The consumption encryption module 21 d is connected after the signal conversion module 200d, encrypts the converted electric signal, and then transmits the electric signal to the account management server 3d. The account management server 3d includes a consumption decryption module 33d and a signal demodulation module 30d. The consumption decryption module 33d performs decryption according to a decryption algorithm corresponding to an encryption algorithm of the consumption encryption module 21 d first, and then the decrypted information is transmitted to the signal demodulation module 30d for demodulation, so as to obtain the original information required for payment.

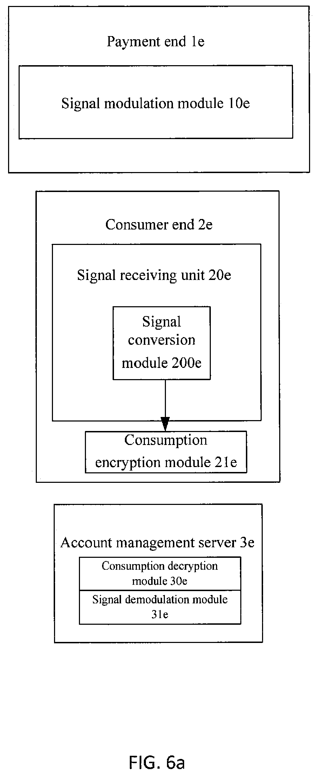

The dynamic key apparatus 4d is disposed in the account management server 3d. The key may be updated dynamically in four manners, and the specific update manners are the same as or similar to the manners in the embodiment shown in FIG. 1c, and are not described herein again. In FIG. 5c, the dynamic key apparatus 4d is disposed in the account management server 3d. In addition, the dynamic key apparatus 4d may also be disposed at the payment end/consumer end locally (for example, in this embodiment, at the payment end 1d and the consumer end 2d locally), and may also update the key in the fourth manners accordingly. The specific update manners are the same as or similar to the manners in the embodiment shown in FIG. 1c, and are not described herein again. FIG. 6a is a schematic diagram of another embodiment of a payment system according to the present application. Referring to FIG. 6a and FIG. 2, in this embodiment, the payment end 1e includes a signal modulation module 10e, which modulates information required for payment into a transmission signal and sends the transmission signal to the consumer end. The consumer end 2e includes a signal receiving unit 20e and a consumption encryption module 21 e, and the signal receiving end includes a signal conversion module 200e. The signal conversion module 200e converts the transmission signal ,which is sent by the payment end to the consumer end, into an electric signal. The consumption encryption module 21e is connected after the signal conversion module 200e, encrypts the converted electric signal, and then transmits the electric signal to the account management server 3e. The encryption manner of the consumption encryption module 21e may be to encrypt the electric signal directly, or encrypt the electric signal together with consumer end information. The consumer end information includes identification information of the signal receiving unit 20e, or time information of the consumer end, or geographic location information of the consumer end, or any combination thereof. The encryption method may be any one of symmetric encryption, asymmetric encryption, or elliptic encryption, and commonly used encryption methods are, for example, DES encryption, 3DES encryption, IDEA encryption, RSA encryption, or AES encryption.

The account management server 3e includes a consumption decryption module 30e and a signal demodulation module 31e. The consumption decryption module 30e performs decryption according to a decryption algorithm corresponding to an encryption algorithm of the consumption encryption module 21e first, and then the decrypted information is transmitted to the signal demodulation module 31e for demodulation, so as to obtain the original information required for payment.

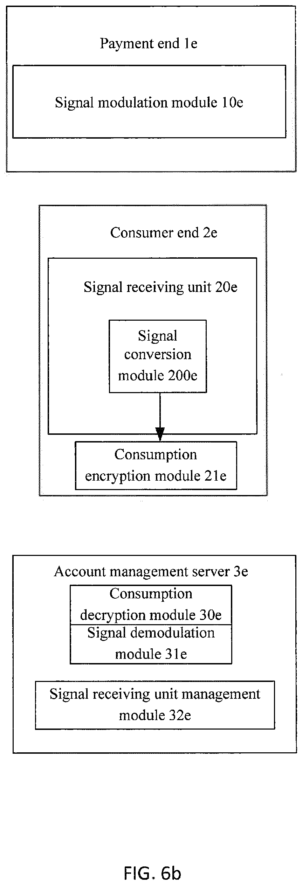

In addition, in a variable embodiment of the present application, as shown in FIG. 6b, a signal receiving unit management module 32e is disposed in the account management server 3e. The signal receiving unit management module 32e stores a legal identifier of the signal receiving unit 20e or information correlated with the identifier, compares the identifier and the information with an actual identifier of the signal receiving unit 20e or actual correlated information that is uploaded by the consumer end 2e, so as to determine whether a currently using signal receiving unit is legal.

The identifier of the signal receiving unit 20e includes a MAC address of the signal receiving unit, an IMEI of the consumer end, or an IMSI, or SIM card information or any combination thereof, or includes MAC address correlation information of the signal receiving unit, IMEI correlation information of the consumer end, IMSI correlation information, or SIM card correlation information or any combination thereof.

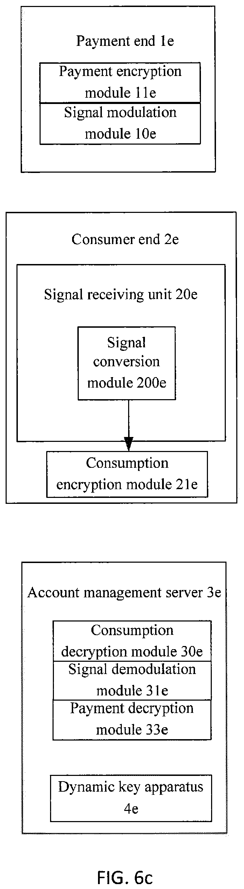

Referring to another embodiment shown in FIG. 6c, the payment end 1e includes a payment encryption module 11e and a signal modulation module 10e. The payment encryption module 11e performs encryption before the information required for payment is modulated into the transmission signal, and then the encrypted information required for payment is modulated into the transmission signal by the signal modulation module 10e connected to the payment encryption module 11e, and sent to the consumer end.

The account management server 3e includes a consumption decryption module 30e, a signal demodulation module 31e, and a payment decryption module 33e. The consumption decryption module 30e performs decryption according to a decryption algorithm corresponding to an encryption algorithm of the consumption encryption module 21e first, and then the decrypted information is transmitted to the signal demodulation module 31e for demodulation, and then the payment decryption module 33e performs decryption according to a decryption algorithm corresponding to an encryption algorithm of the payment encryption module 11e, so as to obtain the original information required for payment.

The dynamic key apparatus 4e is disposed in the account management server 3e. The key may be updated dynamically in four manners, and the specific update manners are the same as or similar to the manners in the embodiment shown in FIG. 1c, and are not described herein again.

In FIG. 6c, the dynamic key apparatus 4e is disposed in the account management server 3e. In addition, the dynamic key apparatus 4e may also be disposed at the payment end/consumer end locally (for example, in this embodiment, at the payment end 1e and the consumer end 2e locally), and may also update the key in the fourth manners accordingly. The specific update manners are the same as or similar to the manners in the embodiment shown in FIG. 1c, and are not described herein again.

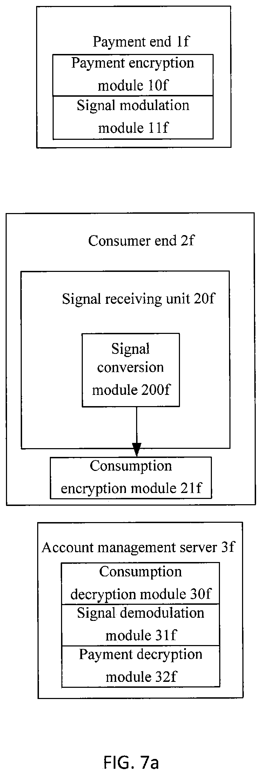

FIG. 7a is a schematic diagram of another embodiment of a payment system according to the present application. Referring to FIG. 7a and FIG. 2, in this embodiment, the payment end If includes a payment encryption module 10f and a signal modulation module 11f. The payment encryption module 10f performs encryption before the information required for payment is modulated into the transmission signal, and then the encrypted information required for payment is modulated into the transmission signal by the signal modulation module 11f connected to the payment encryption module 10f, and sent to the consumer end.

The consumer end 2f includes a signal receiving unit 20f and a consumption encryption module 21 f, and the signal receiving end includes a signal conversion module 200f. The signal conversion module 200f converts the transmission signal sent by the payment end to the consumer end into an electric signal. The consumption encryption module 21 f is connected after the signal conversion module 200f, encrypts the converted electric signal, and then transmits the electric signal to the account management server 3f. The encryption manner of the consumption encryption module 21 f may be to encrypt the electric signal directly, or encrypt the electric signal together with consumer end information. The consumer end information includes identification information of the signal receiving unit 20f, or time information of the consumer end, or geographic location information of the consumer end, or any combination thereof. The encryption method may be any one of symmetric encryption, asymmetric encryption, or elliptic encryption, and commonly used encryption methods are, for example, DES encryption, 3DES encryption, IDEA encryption, RSA encryption, or AES encryption.

The account management server 3f includes a consumption decryption module 30f, a signal demodulation module 31f, and a payment decryption module 32f. The consumption decryption module 30f performs decryption according to a decryption algorithm corresponding to an encryption algorithm of the consumption encryption module 21 f first, and then the decrypted information is transmitted to the signal demodulation module 31f for demodulation, and then the payment decryption module 32f performs decryption according to a decryption algorithm corresponding to an encryption algorithm of the payment encryption module 10f, so as to obtain the original information required for payment.

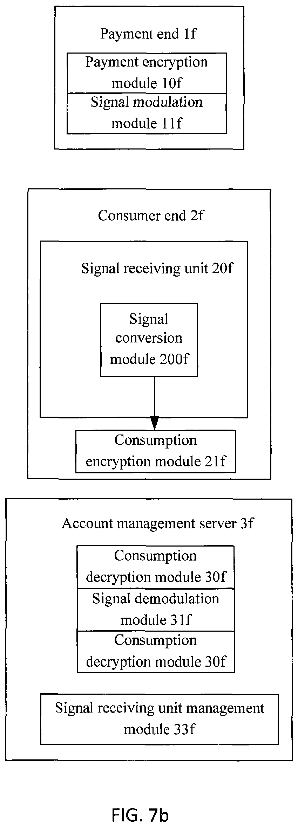

In addition, in a variable embodiment of the present application, as shown in FIG. 7b, a signal receiving unit management module 33f is disposed in the account management server 3f. The signal receiving unit management module 33f stores a legal identifier of the signal receiving unit 20f or information correlated with the identifier, compares the identifier and the information with an actual identifier of the signal receiving unit 20f or actual correlated information that is uploaded by the consumer end 2f, so as to determine whether a currently using signal receiving unit is legal.

The identifier of the signal receiving unit 20f includes a MAC address of the signal receiving unit, an IMEI of the consumer end, or an IMSI, or SIM card information or any combination thereof, or includes MAC address correlation information of the signal receiving unit, IMEI correlation information of the consumer end, IMSI correlation information, or SIM card correlation information or any combination thereof.

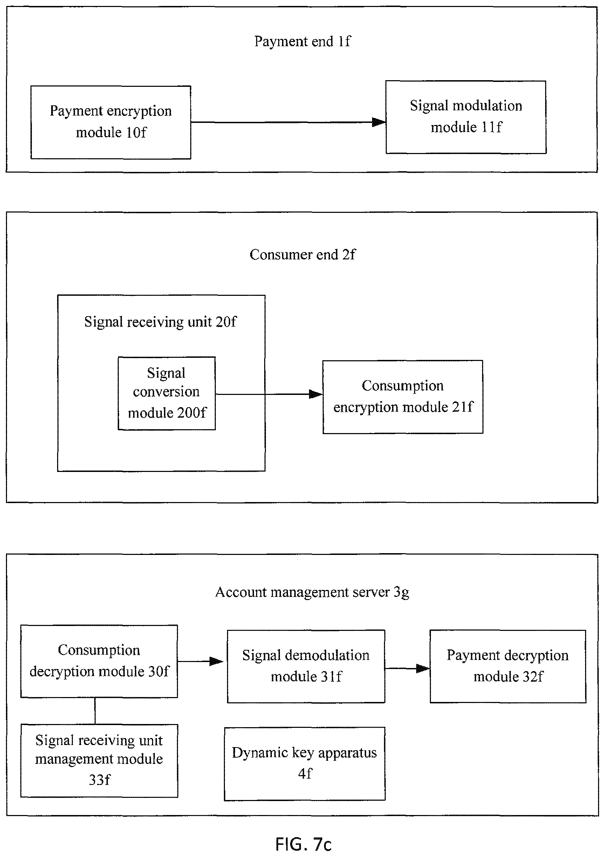

In another variable embodiment shown in FIG. 7c, the dynamic key apparatus 4f is disposed in the account management server 3f. The key may be updated dynamically in four manners, and the specific update manners are the same as or similar to the manners in the embodiment shown in FIG. 1c, and are not described herein again.

In FIG. 7c, the dynamic key apparatus 4f is disposed in the account management server 3f. In addition, the dynamic key apparatus 4f may also be disposed at the payment end/consumer end locally (for example, in this embodiment, at the payment end 1f and the consumer end 2f locally), and may also update the key in the fourth manners accordingly. The specific update manners are the same as or similar to the manners in the embodiment shown in FIG. 1c, and are not described herein again.

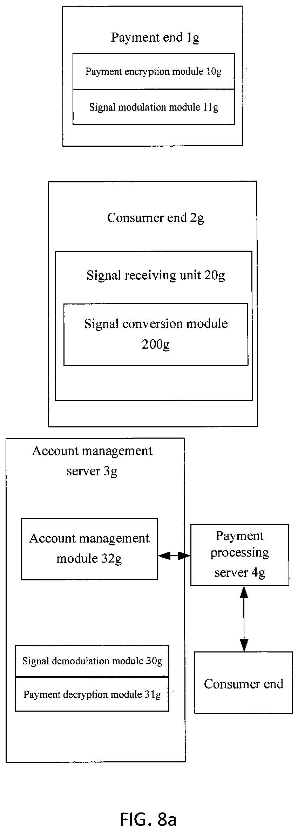

FIG. 8a is a schematic diagram of another embodiment of a payment system according to the present application. Referring to FIG. 8a and FIG. 2, in this embodiment, the payment end 1g includes a payment encryption module 10g and a signal modulation module 11g. The payment encryption module 10g encrypts the information required for payment, and then the signal modulation module 11g modulates the encrypted information required for payment into a transmission signal and sends the transmission signal to the consumer end. The consumer end 2g includes a signal receiving unit 20g, and the signal receiving end includes a signal conversion module 200g. The signal conversion module 200g converts the transmission signal ,which is sent by the payment end to the consumer end, into an electric signal and transmits the electric signal to the account management server end 3g. The account management server 3g includes a signal demodulation module 30g and a payment decryption module 31g. The signal demodulation module 30g receives the electric signal and performs demodulation, and then the payment decryption module 31g decrypts the demodulated electric signal to obtain the original information required for payment.

In addition, the account management sever 3g further includes an account management module 32g, which stores user information, payment account information or account correlation information of a payment account that is uploaded by the payment end, and sends encrypted account information together with a key back to the payment end. Information stored in the account management module 32g is encrypted by the payment encryption module 10 at the payment end. Objects to be encrypted include stored account information, an account identifier allocated by the account management server based on the account information, a payment end key and the like. The payment end key is a key delivered by the account management server to the payment end, or a key generated at the payment end locally.

The entire payment system further includes a payment processing server 4g connected to the consumer end and the account management module 31g, and the payment processing server 4g includes an acquiring server, a settlement server, or an online banking server, or any combination thereof. The payment processing server 4g sends the account management module 31g the information required for payment that is output by the consumer end, and the account management module 31g finds the corresponding payment account information or account correlation information of the payment account and then returns the information to the payment processing server 4g. Encryption and decryption are also performed between the account management module 31g and the payment processing server 4g, and between the payment processing server 4g and the consumer end. For example, encryption and decryption may also be performed on the account information transmitted between the account management module 31g and the payment processing server 4g and the payment information transmitted between the payment processing server 4g and the consumer end.

In addition, in a variation instance of the location of the payment processing server, the payment processing server is not connected to the consumer end, but is connected to only the account management module. The information required for payment that is output by the consumer end is sent to the account management module, and the account management module finds the corresponding payment account information or account correlation information of the payment account and then returns the information to the payment processing server.

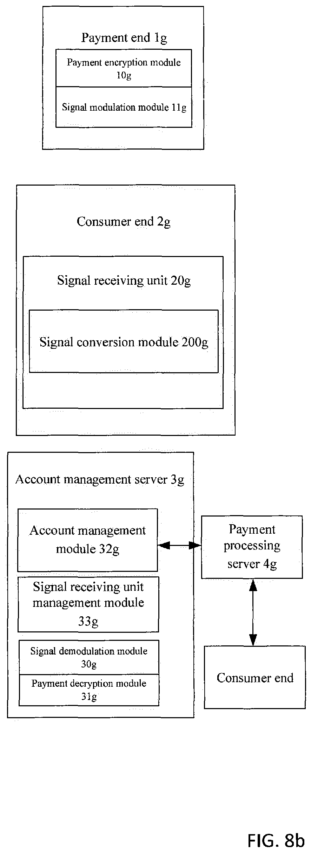

In addition, in variable embodiments of the present application, as shown in FIG. 8b, a signal receiving unit management module 33g is disposed in the account management server 3g. The signal receiving unit management module 33g stores a legal identifier of the signal receiving unit 20g or information correlated with the identifier, compares the identifier and the information with an actual identifier of the signal receiving unit 20g or actual correlated information that is uploaded by the consumer end 2g, so as to determine whether a currently using signal receiving unit is legal.

The identifier of the signal receiving unit 20g includes a MAC address of the signal receiving unit, an IMEI of the consumer end, or an IMSI, or SIM card information or any combination thereof, or includes MAC address correlation information of the signal receiving unit, IMEI correlation information of the consumer end, IMSI correlation information, or SIM card correlation information or any combination thereof.

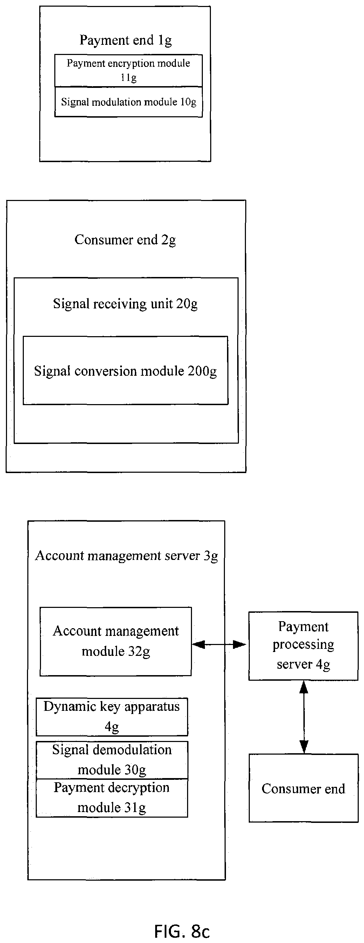

In addition, in another variable embodiment shown in FIG. 8c, the account management sever 3g further includes an account management module 32g, which stores user information, payment account information or account correlation information of a payment account that is uploaded by the payment end, and sends encrypted account information together with a key back to the payment end. Information stored in the account management module 32g is encrypted by the payment encryption module 10g at the payment end. Objects to be encrypted include stored account information, an account identifier allocated by the account management server based on the account information, a payment end key and the like. The payment end key is a key delivered by the account management server to the payment end, or a key generated at the payment end locally.

The entire payment system further includes a payment processing server 4g connected to the consumer end and the account management module 34g, and the payment processing server 4g includes an acquiring server, a settlement server, or an online banking server, or any combination thereof. The payment processing server 4g sends the account management module 32g the information required for payment that is output by the consumer end, and the account management module 32g finds the corresponding payment account information or account correlation information of the payment account and then returns the information to the payment processing server 4g. Encryption and decryption are also performed between the account management module 32g and the payment processing server 4g, and between the payment processing server 4g and the consumer end. For example, encryption and decryption may also be performed on the account information transmitted between the account management module 32g and the payment processing server 4g and the payment information transmitted between the payment processing server 4g and the consumer end.

In addition, in a variation instance of the location of the payment processing server, the payment processing server is not connected to the consumer end, but is only connected to the account management module. The information required for payment that is output by the consumer end is sent to the account management module, and the account management module finds the corresponding payment account information or account correlation information of the payment account and then returns the information to the payment processing server.

The dynamic key apparatus 4g is disposed in the account management server 3g. The key may be updated dynamically in four manners, and the specific update manners are the same as or similar to the manners in the embodiment shown in FIG. 1c, and are not described herein again.

In FIG. 8c, the dynamic key apparatus 4g is disposed in the account management server 3g. In addition, the dynamic key apparatus 4g may also be disposed at the payment end/consumer end locally (for example, in this embodiment, at the payment end 1g locally), and may also update the key in the fourth manners accordingly. The specific update manners are the same as or similar to the manners in the embodiment shown in FIG. 1c, and are not described herein again.

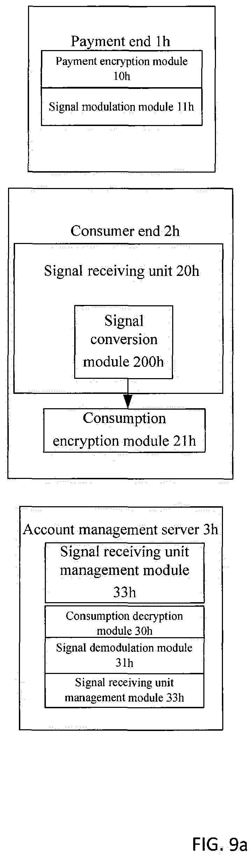

FIG. 9a is a schematic diagram of another embodiment of a payment system according to the present application. Referring to FIG. 9a and FIG. 2, in this embodiment, the payment end 1h includes a payment encryption module 10h and a signal modulation module 11h. The payment encryption module 10h performs encryption before the information required for payment is modulated into the transmission signal, and then the encrypted information required for payment is modulated into the transmission signal by the signal modulation module 11h connected to the payment encryption module 10h, and sent to the consumer end.

The consumer end 2h includes a signal receiving unit 20h and a consumption encryption module 21h. The signal receiving unit 20h is integrated in a chip or a terminal device, and the signal receiving unit 20h further includes a signal conversion module 200h. The signal conversion module 200h converts the transmission signal ,which is sent by the payment end to the consumer end, into an electric signal. The consumption encryption module 21h is connected after the signal conversion module 200h, encrypts the converted electric signal, and then transmits the electric signal to the account management server 3h. The encryption manner of the consumption encryption module 21h may be to encrypt the electric signal directly, or encrypt the electric signal together with consumer end information. The consumer end information includes identification information of the signal receiving unit 20h, or time information of the consumer end, or geographic location information of the consumer end, or any combination thereof. The encryption method may be any one of symmetric encryption, asymmetric encryption, or elliptic encryption, and commonly used encryption methods are, for example, DES encryption, 3DES encryption, IDEA encryption, RSA encryption, or AES encryption.

The account management server 3h includes a consumption decryption module 30h, a signal demodulation module 31h, and a payment decryption module 32h. The consumption decryption module 30h performs decryption according to a decryption algorithm corresponding to an encryption algorithm of the consumption encryption module 21h first, and then the decrypted information is transmitted to the signal demodulation module 31h for demodulation, and then the payment decryption module 32h performs decryption according to a decryption algorithm corresponding to an encryption algorithm of the payment encryption module 10h, so as to obtain the original information required for payment.

A signal receiving unit management module 33h connected to the consumption decryption module 30h is also disposed in the account management server 3h, and stores an identifier of the signal receiving unit 20h or identifier-related information to determine whether a currently using signal receiving unit 20h is legal. The identifier specifically includes a MAC address of the signal receiving unit 20h, an IMEI of the consumer end, or an IMSI, or SIM card information or any combination thereof, or includes MAC address correlation information of the signal receiving unit, IMEI correlation information of the consumer end, IMSI correlation information, or SIM card correlation information or any combination thereof.

Preferably, the password of the payment end is set to be dynamically variable. For this purpose, two implementation manners are applicable. The first manner is that a key update module is additionally disposed in the account management server, and generates a unique key automatically each time and delivers the key to the payment terminal, or generates a set of keys at a time, and then selects one key each time according to an algorithm and delivers the key to the payment end. The payment end key may also be generated in the second local generation manner, in which different keys may be generated locally, or a set of keys is generated at a time and then one of the keys is selected each time according to an algorithm.

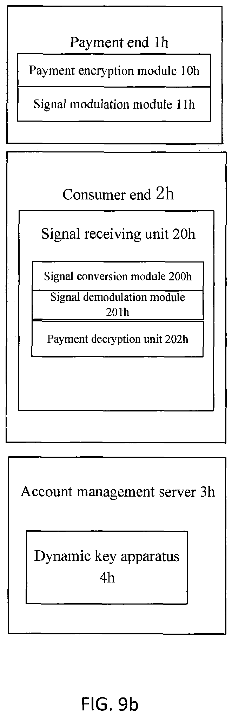

In another variable embodiment shown in FIG. 9b, a signal receiving unit 20h is disposed at the consumer end 2h. Further, a signal conversion module 200h, a signal demodulation module 201h, and a payment decryption unit 202h are disposed in the signal receiving unit 20h. The signal conversion module 200h converts the transmission signal ,which is sent by the payment end to the consumer end, into an electric signal. The signal demodulation module 201h further demodulates the electric signal. Finally, the payment decryption unit 202h decrypts the demodulated information to obtain the original information required for payment.

In this embodiment, the transmission signal includes a light signal, an acoustic signal, an infrared signal, or a radio frequency signal.

The dynamic key apparatus 4h is disposed in the account management server 3h. The key may be updated dynamically in four manners, and the specific update manners are the same as or similar to the manners in the embodiment shown in FIG. 1c, and are not described herein again. In FIG. 9b, the dynamic key apparatus 4h is disposed in the account management server 3h. In addition, the dynamic key apparatus 4h may also be disposed at the payment end/consumer end locally (for example, in this embodiment, at the payment end 1h and the consumer end 2h locally), and may also update the key in the fourth manners accordingly. The specific update manners are the same as or similar to the manners in the embodiment shown in FIG. 1c, and are not described herein again.

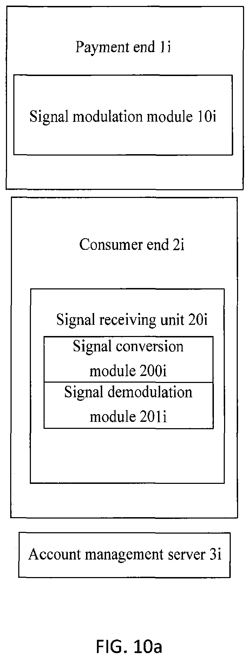

FIG. 10a is a schematic diagram of another embodiment of a payment system according to the present application. Referring to FIG. 10a and FIG. 2, in this embodiment, the payment system includes a payment end 1i, a consumer end 2i, and an account management server 3i. A signal modulation module 10i is disposed in the payment end 1i, and modulates information required for payment into a transmission signal and sends the transmission signal to the consumer end.

A signal receiving unit 20i is disposed in the consumer end 2i. Further, a signal conversion module 200i and a signal demodulation module 201i are disposed in the signal receiving unit 20i. The signal conversion module 200i converts the transmission signal sent by the payment end to the consumer end into an electric signal. The signal demodulation module 201i further demodulates the electric signal to obtain the original information required for payment.

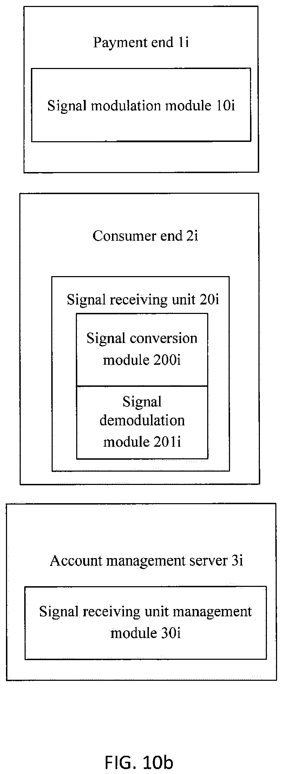

In addition, in a variable embodiment of the present application, as shown in FIG. 10b, a signal receiving unit management module 30i is disposed in the account management server 3i. The signal receiving unit management module 30i stores a legal identifier of the signal receiving unit 20i or information correlated with the identifier, compares the identifier and the information with an actual identifier of the signal receiving unit 20i or actual correlated information that is uploaded by the consumer end 2i, so as to determine whether a currently using signal receiving unit is legal.

The identifier of the signal receiving unit 20i includes a MAC address of the signal receiving unit, an IMEI of the consumer end, or an IMSI, or SIM card information or any combination thereof, or includes MAC address correlation information of the signal receiving unit, IMEI correlation information of the consumer end, IMSI correlation information, or SIM card correlation information or any combination thereof.

In this embodiment, the transmission signal includes a light signal, an acoustic signal, an infrared signal, or a radio frequency signal.

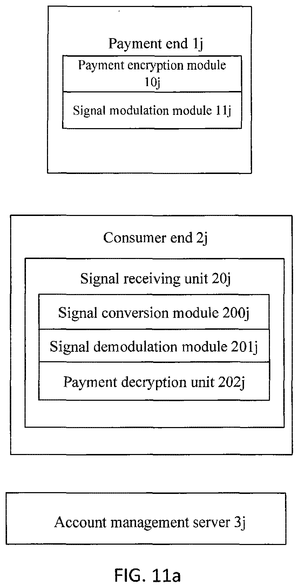

FIG. 11a is a schematic diagram of another embodiment of a payment system according to the present application. Referring to FIG. 11a and FIG. 2, in this embodiment, the payment system includes a payment end 1j, a consumer end 2j, and an account management server 3j. A payment encryption module 10j and a signal modulation module 11j are disposed in the payment end 1j. The payment encryption module 10j performs encryption before the information required for payment is modulated into the transmission signal, and then the encrypted information required for payment is modulated into the transmission signal by the signal modulation module 11j connected after the payment encryption module 10j, and sent to the consumer end.

A signal receiving unit 20j is disposed in the consumer end 2j. Further, a signal conversion module 200j, a signal demodulation module 201j, and a payment decryption unit 202j are disposed in the signal receiving unit 20j. The signal conversion module 200j converts the transmission signal, which is sent by the payment end to the consumer end, into an electric signal. The signal demodulation module 201j further demodulates the electric signal. Finally, the payment decryption unit 202j decrypts the demodulated information to obtain the original information required for payment.

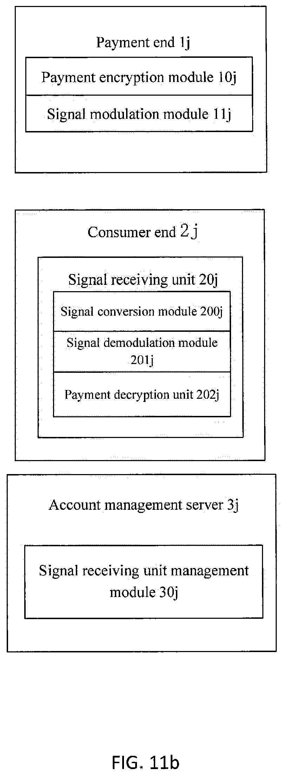

In addition, in a variable embodiment of the present application, as shown in FIG. 11b, a signal receiving unit management module 30j is disposed in the account management server 3j. The signal receiving unit management module 30j stores a legal identifier of the signal receiving unit 20j or information correlated with the identifier, compares the identifier and the information with an actual identifier of the signal receiving unit 20j or actual correlated information that is uploaded by the consumer end 2j, so as to determine whether a currently using signal receiving unit is legal.

The identifier of the signal receiving unit 20j includes a MAC address of the signal receiving unit, an IMEI of the consumer end, or an IMSI, or SIM card information or any combination thereof, or includes MAC address correlation information of the signal receiving unit, IMEI correlation information of the consumer end, IMSI correlation information, or SIM card correlation information or any combination thereof.

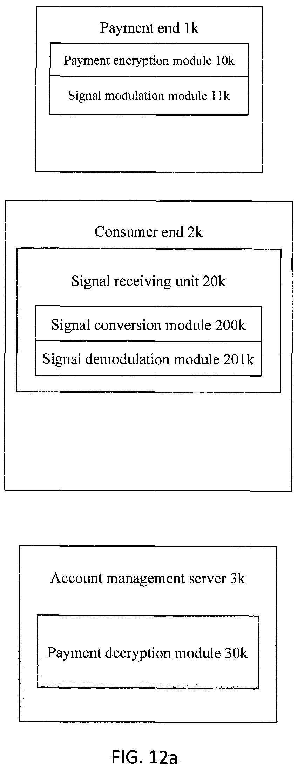

FIG. 12a is a schematic diagram of another embodiment of a payment system according to the present application. Referring to FIG. 12a and FIG. 2, in this embodiment, the payment system includes a payment end 1k, a consumer end 2k, and an account management server 3k.

A payment encryption module 10k and a signal modulation module 11k are disposed in the payment end 1k. The payment encryption module 10k performs encryption before the information required for payment is modulated into the transmission signal, and then the encrypted information required for payment is modulated into the transmission signal by the signal modulation module 11k connected after the payment encryption module 10k, and sent to the consumer end.

A signal receiving unit 20k is disposed in the consumer end 2k. Further, a signal conversion module 200k and a signal demodulation module 201k are disposed in the signal receiving unit 20k. The signal conversion module 200k converts the transmission signal sent by the payment end to the consumer end into an electric signal. The signal demodulation module 201k further demodulates the electric signal.

A payment decryption module 30k is disposed in the account management server 3k. The payment decryption module 30k decrypts the demodulated information to obtain the original information required for payment.

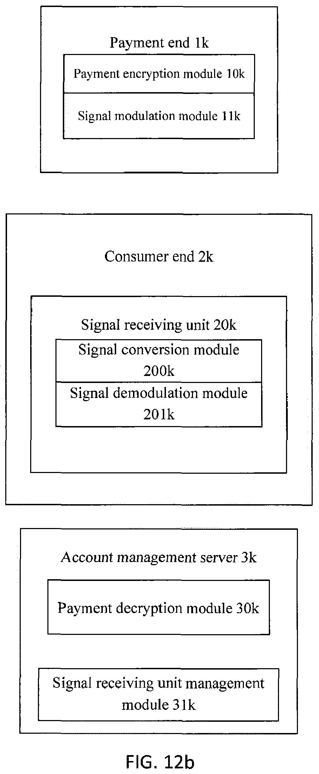

In addition, in a variable embodiment of the present application, as shown in FIG. 12b, a signal receiving unit management module 31k is disposed in the account management server 3k. The signal receiving unit management module 31k stores a legal identifier of the signal receiving unit 20k or information correlated with the identifier, compares the identifier and the information with an actual identifier of the signal receiving unit 20k or actual correlated information that is uploaded by the consumer end 2k, so as to determine whether a currently using signal receiving unit is legal.

The identifier of the signal receiving unit 20k includes a MAC address of the signal receiving unit, an IMEI of the consumer end, or an IMSI, or SIM card information or any combination thereof, or includes MAC address correlation information of the signal receiving unit, IMEI correlation information of the consumer end, IMSI correlation information, or SIM card correlation information or any combination thereof.

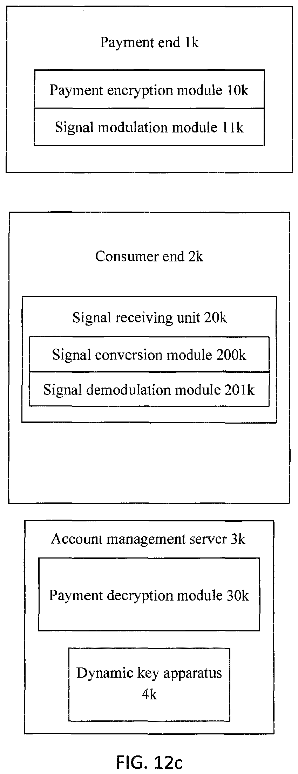

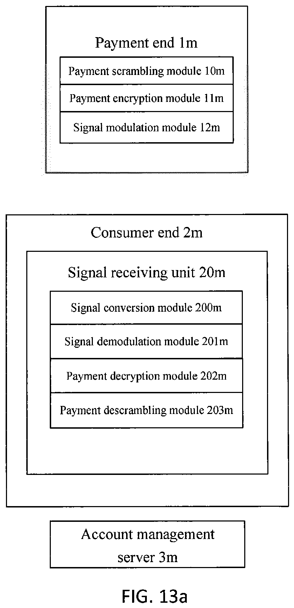

In another variable embodiment of the present application shown in FIG. 12c, the dynamic key apparatus 4k is disposed in the account management server 3k. In addition, the dynamic key apparatus 4k may also be disposed at the payment end/consumer end locally (for example, in this embodiment, at the payment end 1k locally), and may also update the key in the fourth manners accordingly. The specific update manners are the same as or similar to the manners in the embodiment shown in FIG. 1c, and are not described herein again. FIG. 13a is a schematic diagram of another embodiment of a payment system according to the present application. Referring to FIG. 13a and FIG. 2, in this embodiment, the payment system includes a payment end 1m, a consumer end 2m, and an account management server 3m.

A payment scrambling module 10m, a payment encryption module 11m, and a signal modulation module 12m are disposed in the payment end 1m. The payment scrambling module 10m is connected before the payment encryption module 11m, and scrambles the information required for payment first. Then the scrambled information required for payment is encrypted in the payment encryption module 11m. Finally, the signal modulation module 12m connected after the payment encryption module 11m modulates the scrambled and encrypted information required for payment into a transmission signal and sends the transmission signal to the consumer end.

A signal receiving unit 20m is disposed in the consumer end 2m. A signal conversion module 200m, a signal demodulation module 201m, a payment decryption module 202m, and a payment descrambling module 203m are disposed in the signal receiving unit 20m. The signal conversion module 200m converts the transmission signal ,which is sent by the payment end to the consumer end, into an electric signal. The signal demodulation module 201m further demodulates the electric signal. Subsequently, the payment decryption module 202m decrypts the demodulated information. Finally, the payment descrambling module 203m descrambles the demodulated and decrypted information to obtain the original information required for payment.

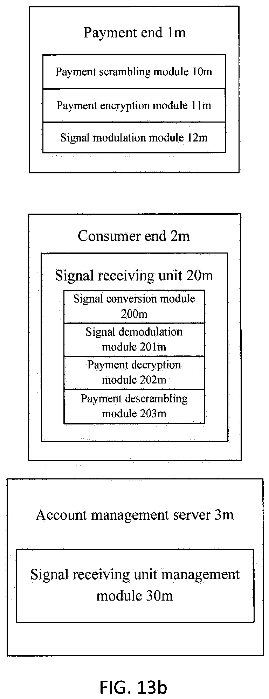

In addition, in variable embodiments of the present application, as shown in FIG. 13b, a signal receiving unit management module 30m is disposed in the account management server 3m. The signal receiving unit management module 30m stores a legal identifier of the signal receiving unit 20m or information correlated with the identifier, compares the identifier and the information with an actual identifier of the signal receiving unit 20m or actual correlated information that is uploaded by the consumer end 2m, so as to determine whether a currently using signal receiving unit is legal.

The identifier of the signal receiving unit 20m includes a MAC address of the signal receiving unit, an IMEI of the consumer end, or an IMSI, or SIM card information or any combination thereof, or includes MAC address correlation information of the signal receiving unit, IMEI correlation information of the consumer end, IMSI correlation information, or SIM card correlation information or any combination thereof.

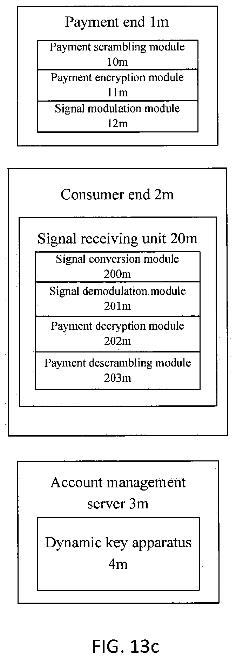

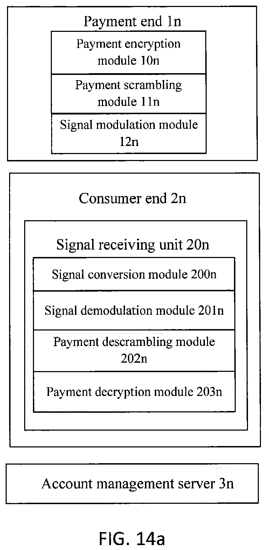

In another variable embodiment of the present application shown in FIG. 13c, the dynamic key apparatus 4m is disposed in the account management server 3m. The key may be updated dynamically in four manners, and the specific update manners are the same as or similar to the manners in the embodiment shown in FIG. 1c, and are not described herein again. In FIG. 13c, the dynamic key apparatus 4m is disposed in the account management server 3m. In addition, the dynamic key apparatus 4m may also be disposed at the payment end/consumer end locally (for example, in this embodiment, at the payment end 1m and the consumer end 2m locally), and may also update the key in the fourth manners accordingly. The specific update manners are the same as or similar to the manners in the embodiment shown in FIG. 1c, and are not described herein again. FIG. 14a is a schematic diagram of another embodiment of a payment system according to the present application. Referring to FIG. 14a and FIG. 2, in this embodiment, the payment system includes a payment end 1n, a consumer end 2n, and an account management server 3n.

A payment encryption module 10n, a payment scrambling module 11n, and a signal modulation module 12n are disposed in the payment end 1n. The payment encryption module 10n encrypts information required for payment first, and then the payment scrambling module 11n connected between the payment encryption module 10n and the signal modulation module 12n scrambles the encrypted information required for payment. Finally, the signal modulation module 12n modulates the encrypted and scrambled information required for payment into a transmission signal and sends the transmission signal to the consumer end.

A signal receiving unit 20n is disposed in the consumer end 2n. A signal conversion module 200n, a signal demodulation module 201n, a payment descrambling module 202n, and a payment decryption module 203n are disposed in the signal receiving unit 20n. The signal conversion module 200n converts the transmission signal sent by the payment end to the consumer end into an electric signal. The signal demodulation module 201n further demodulates the electric signal. Subsequently, the payment descrambling module 202n descrambles the demodulated information. Finally, the payment decryption module 203n decrypts the demodulated and descrambled information to obtain the original information required for payment.

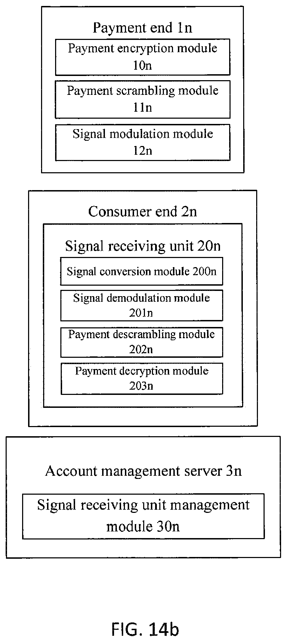

In addition, in a variable embodiment of the present application, as shown in FIG. 14b, a signal receiving unit management module 30n is disposed in the account management server 3n. The signal receiving unit management module 30n stores a legal identifier of the signal receiving unit 20n or information correlated with the identifier, compares the identifier and the information with an actual identifier of the signal receiving unit 20n or actual correlated information that is uploaded by the consumer end 2n, so as to determine whether a currently using signal receiving unit is legal.

The identifier of the signal receiving unit 20n includes a MAC address of the signal receiving unit, an IMEI of the consumer end, or an IMSI, or SIM card information or any combination thereof, or includes MAC address correlation information of the signal receiving unit, IMEI correlation information of the consumer end, IMSI correlation information, or SIM card correlation information or any combination thereof.

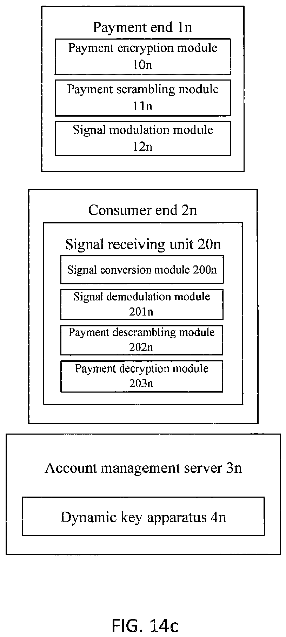

FIG. 14c shows another variable embodiment of the present application. The dynamic key apparatus 4n is disposed in the account management server 3n. The key may be updated dynamically in four manners, and the specific update manners are the same as or similar to the manners in the embodiment shown in FIG. 1c, and are not described herein again. In FIG. 14c, the dynamic key apparatus 4n is disposed in the account management server 3n. In addition, the dynamic key apparatus 4n may also be disposed at the payment end/consumer end locally (for example, in this embodiment, at the payment end In and the consumer end 2n locally), and may also update the key in the fourth manners accordingly. The specific update manners are the same as or similar to the manners in the embodiment shown in FIG. 1c, and are not described herein again.

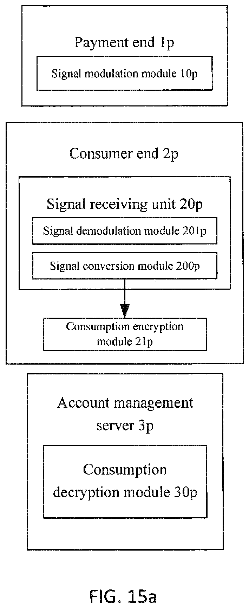

FIG. 15a is a schematic diagram of another embodiment of a payment system according to the present application. Referring to FIG. 15a and FIG. 2, in this embodiment, the payment system includes a payment end 1p, a consumer end 2p, and an account management server 3p.

A signal modulation module 10p is disposed in the payment end 1p, and modulates information required for payment into a transmission signal and sends the transmission signal to the consumer end.

A signal receiving unit 20p and a consumption encryption module 21p are disposed in the consumer end 2p. Further, a signal conversion module 200p and a signal demodulation module 201p are disposed in the signal receiving unit 20p. The signal conversion module 200p converts the transmission signal ,which is sent by the payment end to the consumer end, into an electric signal. The signal demodulation module 201p further demodulates the electric signal. The consumption encryption module 21p is connected to the signal conversion module 200p, and encrypts the converted electric signal. The encryption method may be any one of symmetric encryption, asymmetric encryption, or elliptic encryption, and commonly used encryption methods are, for example, DES encryption, 3DES encryption, IDEA encryption, RSA encryption, DSA encryption, or AES encryption. The encryption manner used by the consumption encryption module 21p to encrypt the electric signal may be to encrypt the electric signal directly, or encrypt the electric signal together with consumer end information. The consumer end information includes identification information of the signal receiving unit 20p, or time information of the consumer end, or geographic information of the consumer end, or any combination thereof.

The account management server 3p further includes a consumption decryption module 30p. The consumption decryption module 30p performs decryption according to a decryption algorithm corresponding to an encryption algorithm of the consumption encryption module 21p, and then performs subsequent operations.

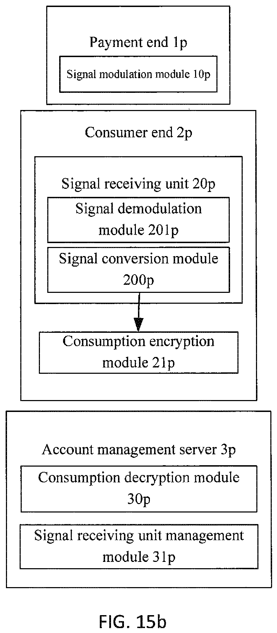

In addition, in a variable embodiment of the present application, as shown in FIG. 15b, a signal receiving unit management module 31p is disposed in the account management server 3p. The signal receiving unit management module 31p stores a legal identifier of the signal receiving unit 20p or information correlated with the identifier, compares the identifier and the information with an actual identifier of the signal receiving unit 20p or actual correlated information that is uploaded by the consumer end 2p, so as to determine whether a currently using signal receiving unit is legal.

The identifier of the signal receiving unit 20p includes a MAC address of the signal receiving unit, an IMEI of the consumer end, or an IMSI, or SIM card information or any combination thereof, or includes MAC address correlation information of the signal receiving unit, IMEI correlation information of the consumer end, IMSI correlation information, or SIM card correlation information or any combination thereof.

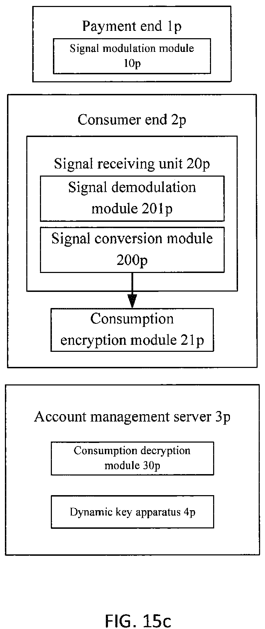

In another embodiment of the present application, as shown in FIG. 15c, the dynamic key apparatus 4p is disposed in the account management server 3p. The key may be updated dynamically in four manners, and the specific update manners are the same as or similar to the manners in the embodiment shown in FIG. 1c, and are not described herein again. In FIG. 15c, the dynamic key apparatus 4p is disposed in the account management server 3p. In addition, the dynamic key apparatus 4p may also be disposed at the payment end/consumer end locally (for example, in this embodiment, at the consumer end 2p locally), and may also update the key in the fourth manners accordingly. The specific update manners are the same as or similar to the manners in the embodiment shown in FIG. 1c, and are not described herein again.

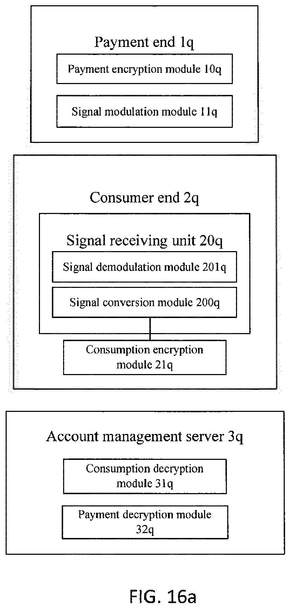

FIG. 16a is a schematic diagram of another embodiment of a payment system according to the present application. Referring to FIG. 16a and FIG. 2, in this embodiment, the payment system includes a payment end 1q, a consumer end 2q, and an account management server 3q.

A payment encryption module 10q and a signal modulation module 11q are disposed in the payment end 1q. The payment encryption module 10q performs encryption before the information required for payment is modulated into the transmission signal, and then the encrypted information required for payment is modulated into the transmission signal by the signal modulation module 11q connected after the payment encryption module 10q, and sent to the consumer end.

A signal receiving unit 20q and a consumption encryption module 21q are disposed in the consumer end 2q. Further, a signal conversion module 200q and a signal demodulation module 201q are disposed in the signal receiving unit 20q. The consumption encryption module 21q is connected to the signal conversion module 200q, and encrypts the converted electric signal. The encryption method may be any one of symmetric encryption, asymmetric encryption, or elliptic encryption, and commonly used encryption methods are, for example, DES encryption, 3DES encryption, IDEA encryption, RSA encryption, DSA encryption, or AES encryption. The encryption manner used by the consumption encryption module 21q to encrypt the electric signal may be to encrypt the electric signal directly, or encrypt the electric signal together with consumer end information. The consumer end information includes identification information of the signal receiving unit 20q, or time information of the consumer end, or geographic information of the consumer end, or any combination thereof.

A consumption decryption module 31 q and a payment decryption module 32q are disposed in the account management server 3q. The consumption decryption module 31 q performs decryption according to a decryption algorithm corresponding to an encryption algorithm of the consumption encryption module 21q first. The decrypted information is transmitted to the signal demodulation module 201q for demodulation. The signal demodulation module 201q further demodulates the electric signal. Finally, the payment decryption module 32q performs decryption according to a decryption algorithm corresponding to an encryption algorithm of the payment end.

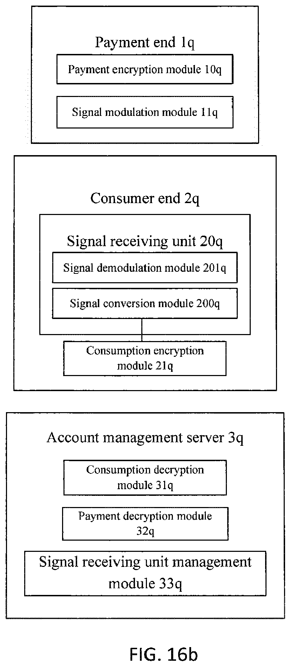

In addition, in a variable embodiment of the present application, as shown in FIG. 16b, a signal receiving unit management module 33q is disposed in the account management server 3q. The signal receiving unit management module 33q stores a legal identifier of the signal receiving unit 20q or information correlated with the identifier, compares the identifier and the information with an actual identifier of the signal receiving unit 20q or actual correlated information that is uploaded by the consumer end 2q, so as to determine whether a currently using signal receiving unit is legal.

The identifier of the signal receiving unit 20q includes a MAC address of the signal receiving unit, an IMEI of the consumer end, or an IMSI, or SIM card information or any combination thereof, or includes MAC address correlation information of the signal receiving unit, IMEI correlation information of the consumer end, IMSI correlation information, or SIM card correlation information or any combination thereof.

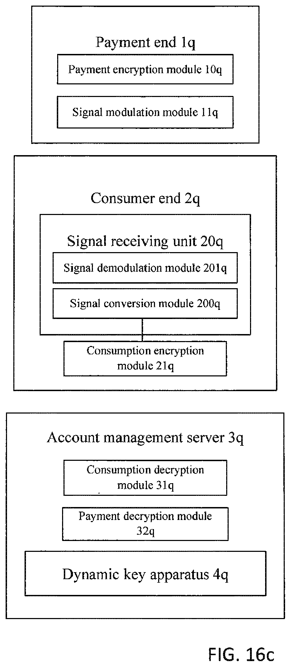

In another variable embodiment of the present application, as shown in FIG. 16c, the dynamic key apparatus 4q is disposed in the account management server 3q. The key may be updated dynamically in four manners, and the specific update manners are the same as or similar to the manners in the embodiment shown in FIG. 1c, and are not described herein again. In FIG. 16c, the dynamic key apparatus 4q is disposed in the account management server 3q. In addition, the dynamic key apparatus 4q may also be disposed at the payment end/consumer end locally (for example, in this embodiment, at the payment end 1q and the consumer end 2q locally), and may also update the key in the fourth manners accordingly. The specific update manners are the same as or similar to the manners in the embodiment shown in FIG. 1c, and are not described herein again.

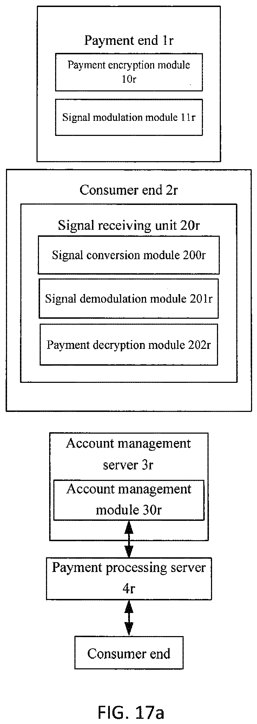

FIG. 17a is a schematic diagram of another embodiment of a payment system according to the present application. Referring to FIG. 17a and FIG. 2, in this embodiment, the payment system includes a payment end 1r, a consumer end 2r, and an account management server 3r.

A payment encryption module 10r and a signal modulation module 11r are disposed in the payment end 1r. The payment encryption module 10r encrypts the information required for payment, and then the signal modulation module 11r modulates the encrypted information required for payment into a transmission signal and sends the transmission signal to the consumer end.

A signal receiving unit 20r is disposed in the consumer end 2r. Further, a signal conversion module 200r, a signal demodulation module 201r, and a payment decryption module 202r are disposed in the signal receiving unit 20r. The signal conversion module 200r converts the transmission signal sent by the payment end to the consumer end into an electric signal. The signal demodulation module 201r further demodulates the electric signal. The payment decryption module 202r decrypts the demodulated information.

In addition, the account management sever 3r further includes an account management module 30r, which is configured to store user information, payment account information or account correlation information of a payment account that is uploaded by the payment end, and send encrypted account information together with a key back to the payment end. Information required in a payment phase, which is encrypted by the payment encryption module 10r, includes stored account information, an account identifier allocated by the account management server based on the account information, a payment end key and the like.

The payment system in this embodiment includes a payment processing server 4r, and the payment processing server 4r includes an acquiring server, a settlement server, or an online banking server, or any combination thereof. The payment processing server 4r may be connected to the consumer end and the account management module 30r, or may be connected to only the account management module 30r but not connected to the consumer end. For the former, the payment processing server 4r sends the account management module 30r the information required for payment that is output by the consumer end, and the account management module 30r finds the corresponding payment account information or account correlation information of the payment account and then returns the information to the payment processing server 4r. For the latter, the information required for payment that is output by the consumer end is sent to the account management module 30r, and the account management module 30r finds the corresponding payment account information or account correlation information of the payment account and then returns the information to the payment processing server 4r. In addition, encryption and decryption are also performed between the account management module 30r and the payment processing server 4r, and between the payment processing server 4r and the consumer end.

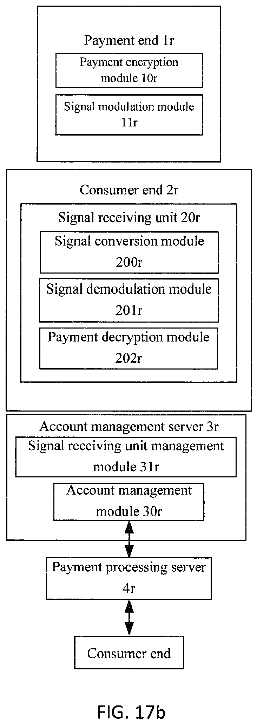

In addition, in a variable embodiment of the present application, as shown in FIG. 17b, a signal receiving unit management module 31r is disposed in the account management server 3r. The signal receiving unit management module 31r stores a legal identifier of the signal receiving unit 20r or information correlated with the identifier, compares the identifier and the information with an actual identifier of the signal receiving unit 20r or actual correlated information that is uploaded by the consumer end 2r, so as to determine whether a currently using signal receiving unit is legal.

The identifier of the signal receiving unit 20r includes a MAC address of the signal receiving unit, an IMEI of the consumer end, or an IMSI, or SIM card information or any combination thereof, or includes MAC address correlation information of the signal receiving unit, IMEI correlation information of the consumer end, IMSI correlation information, or SIM card correlation information or any combination thereof.

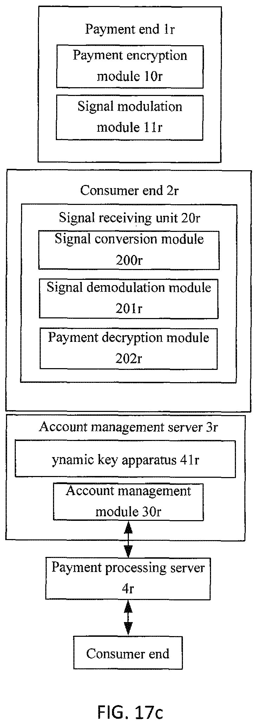

In another variable embodiment of the present application, as shown in FIG. 17c, the dynamic key apparatus 4r is disposed in the account management server 3r. The key may be updated dynamically in four manners, and the specific update manners are the same as or similar to the manners in the embodiment shown in FIG. 1c, and are not described herein again. In FIG. 17c, the dynamic key apparatus 4r is disposed in the account management server 3r. In addition, the dynamic key apparatus 4r may also be disposed at the payment end/consumer end locally (for example, in this embodiment, at the payment end 1r and the consumer end 2r locally), and may also update the key in the fourth manners accordingly. The specific update manners are the same as or similar to the manners in the embodiment shown in FIG. 1c, and are not described herein again.

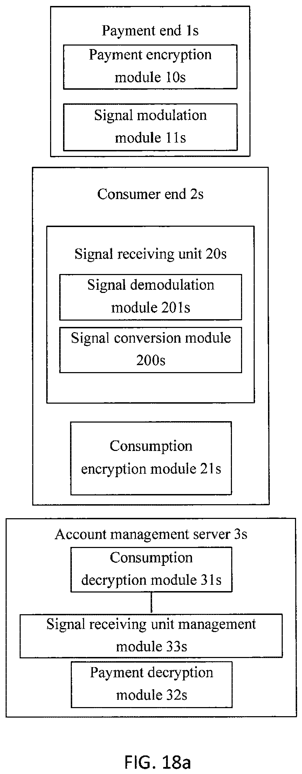

FIG. 18a is a schematic diagram of another embodiment of a payment system according to the present application. Referring to FIG. 18a and FIG. 2, in this embodiment, the payment system includes a payment end 1s, a consumer end 2s, and an account management server 3s.

A payment encryption module 10s and a signal modulation module 11s are disposed in the payment end 1s. The payment encryption module 10s encrypts information required for payment, and the signal modulation module 11s modulates the encrypted information required for payment into a transmission signal. In addition, the payment encryption module 10s reads hardware identification information of the payment end and performs encryption. The payment end is a mobile terminal, and the hardware identification information is an IMEI of the mobile terminal or correlation information, an IMSI or correlation information, or SIM card identification information or correlation information, or any combination thereof. The payment end key is a key delivered by the account management server to the payment end, or a key generated at the payment end locally, and the payment end key is dynamically variable. Preferably, a key update module is disposed in the account management server, and generates a unique key automatically each time and delivers the key to the payment terminal, or generates a set of keys at a time, and then selects one key each time according to an algorithm and delivers the key to the payment end. Alternatively, the payment end generates the payment end key locally, and generates a unique key locally each time, or generates a set of keys at a time and then selects one of the keys each time according to an algorithm.

A signal receiving unit 20s and a consumption encryption module 21s are disposed in the consumer end 2s. The signal receiving unit 20s is integrated in a chip or a terminal device, and a signal conversion module 200s and a signal demodulation module 201s are further disposed. The consumption encryption module 21s is connected to the signal conversion module 200s, and encrypts the converted electric signal. The encryption method may be any one of symmetric encryption, asymmetric encryption, or elliptic encryption, and commonly used encryption methods are, for example, DES encryption, 3DES encryption, IDEA encryption, RSA encryption, DSA encryption, or AES encryption. The encryption manner used by the consumption encryption module 21s to encrypt the electric signal may be to encrypt the electric signal directly, or encrypt the electric signal together with consumer end information. The consumer end information includes identification information of the signal receiving unit 20s, or time information of the consumer end, or geographic information of the consumer end, or any combination thereof.

A consumption decryption module 31s and a payment decryption module 32s are disposed in the account management server 3s. The consumption decryption module 31s performs decryption according to a decryption algorithm corresponding to an encryption algorithm of the consumption encryption module 21s first. The decrypted information is transmitted to the signal demodulation module 201s for demodulation. The signal demodulation module 201s further demodulates the electric signal. Finally, the payment decryption module 32s performs decryption according to a decryption algorithm corresponding to an encryption algorithm of the payment end.

In addition, a signal receiving unit management module 33s is disposed in the account management server 3s, and is configured to store an identifier of the signal receiving unit 20s or identifier-related information to determine whether a currently using signal receiving unit 20s is legal. The identifier of the receiving unit 20s includes a MAC address of the signal receiving unit, an IMEI of the consumer end, or an IMSI, or SIM card information or any combination thereof, or includes MAC address correlation information of the signal receiving unit, IMEI correlation information of the consumer end, IMSI correlation information, or SIM card correlation information or any combination thereof.

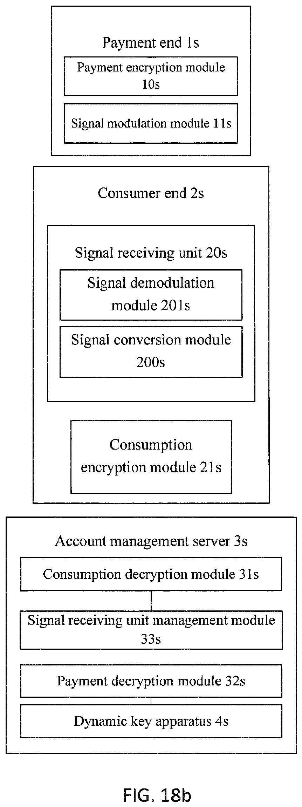

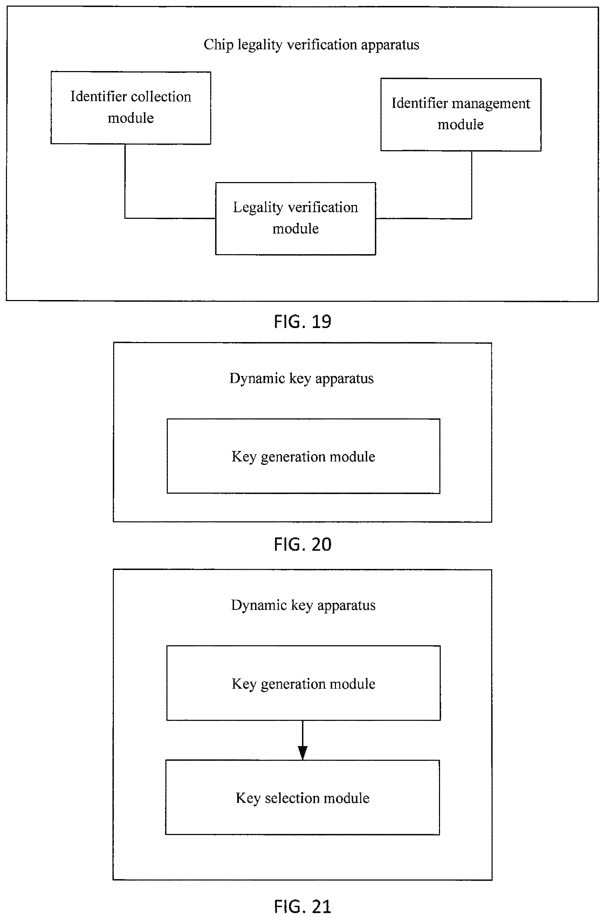

In another variable embodiment of the present application, as shown in FIG. 18b, the dynamic key apparatus 4s is disposed in the account management server 3s. The key may be updated dynamically in four manners, and the specific update manners are the same as or similar to the manners in the embodiment shown in FIG. 1c, and are not described herein again. In FIG. 18b, the dynamic key apparatus 4s is disposed in the account management server 3s. In addition, the dynamic key apparatus 4s may also be disposed at the payment end/consumer end locally (for example, in this embodiment, at the payment end 1s and the consumer end 2s locally), and may also update the key in the fourth manners accordingly. The specific update manners are the same as or similar to the manners in the embodiment shown in FIG. 1c, and are not described herein again. The present application further discloses a dynamic key apparatus. As shown in FIG. 20, the dynamic key apparatus includes a key generation module. The key generation module generates a unique key each time, and delivers the key to a receiving device. In another embodiment, the key generation module generates a set of keys according to a preset rule and delivers the keys to a receiving device, whereupon the receiving device selects at least one key from the set of keys when needing to use the key, where the preset rule is generated periodically or generated after the Internet is accessed or generated after payment is made for a preset quantity of times.

As shown in FIG. 21, the dynamic key apparatus in the present application includes a key generation module and a key selection module. The key generation module generates a set of keys at a time, and the key selection module is connected to the key generation module, and selects at least one key from the set of keys and delivers the key to a receiving device.

In another embodiment, the key generation module generates a set of keys each time. The key selection module is connected to the key generation module, and selects at least one key from the set of keys generated each time and delivers the key to a receiving device.

The dynamic key apparatus mentioned in the foregoing embodiment is disposed in a server or a receiving device itself.

FIG. 19 is a schematic diagram of an exemplary embodiment of a chip legality verification apparatus according to the present application. Referring to FIG. 17, the chip legality verification apparatus in this embodiment includes an identifier collection module, an identifier management module, and a legality verification module.

The identifier collection module collects an actual identifier of a chip and uploads the actual identifier to a server. The identifier management module stores a legal identifier of the chip in the server. The legality verification module is connected to the identifier collection module and the identifier management module, and compares the collected actual identifier with the legal identifier in the identifier management module to determine whether the chip is legal.

In this embodiment, the identifier of the chip includes a MAC address of the signal receiving unit, an IMEI of the consumer end, or an IMSI, or SIM card information or any combination thereof, or includes MAC address correlation information of the signal receiving unit, IMEI correlation information of the consumer end, IMSI correlation information, or SIM card correlation information or any combination thereof.

To simplify interpretation, the foregoing methods are illustrated and described as a series of actions. However, it should be understood that the methods are not limited by order of the actions because, according to one or more embodiments, some actions may occur in different order or may concurrently occur together with actions illustrated and described herein or actions that are not illustrated or described herein but understandable by a person skilled in the art.

A person skilled in the art is further aware that, various illustrative logical boards, modules, circuits and algorithm steps described with reference to the embodiments disclosed herein may be implemented as electronic hardware or computer software or a combination thereof. In order to clearly describe interchangeability between hardware and software, various illustrative components, frames, modules, circuits, and steps are generically described above in the form of their functionality. Whether the functionality is implemented as hardware or software depends on specific application and design constraints applied to an overall system. A person skilled in the art may implement the described functionality for each specific application in different manners, but it should not be considered that the implementation goes beyond the scope of the present application.

Various illustrative boards, modules, and circuits described in the embodiments disclosed herein may be implemented or executed by a general purpose processor, a digital signal processor (DSP), an application-specific integrated circuit (ASIC), a field programmable gate array, or other programmable logic devices, discrete gates or transistor logics, discrete hardware devices, or any combination designed to implement functions described herein. The general purpose processor may be a microprocessor, but in an alternative solution, the processor may be any conventional processor, control, microcontroller, or state machine. The processor may also be implemented as a combination of computing devices, such as a combination of a DSP and a microprocessor, multiple microprocessors, one or more microprocessors that collaborate with a DSP core, or any other similar configurations.

The steps of methods or algorithms described with reference to the embodiments disclosed herein may be reflected directly in hardware, a software module executed by a processor, or a combination thereof. The software module may camp on a RAM memory a flash memory, a ROM memory, an EPROM memory, an EEPROM memory, a register, a hard disk, a movable disk, a CD-ROM, or any other forms of storage medium known in the art. An exemplary storage medium is coupled to a processor so that the processor can read and write information into/from the storage medium. In an alternative solution, the storage medium may be integrated into the processor. The processor and the storage medium may camp on the ASIC. The ASIC may camp on a user terminal. In an alternative solution, the processor and the storage medium may camp on a user terminal as stand-alone components.

In one or more exemplary embodiments, the described functions may be implemented in hardware, software, firmware, or any combination thereof. If the functions are implemented in software as a computer program product, each function may be stored as one or more instructions or code in a computer-readable medium or transferred by means of it. The computer-readable medium includes a computer storage medium and a communication medium, and includes any medium that causes transfer of a computer program from one place to another. The storage medium may be any available medium that can be accessed by a computer. Exemplarily rather than restrictively, the computer-readable medium may include: RAM, ROM, EEPROM, CD-ROM or other optical disk storage, magnetic disk storage or other magnetic storage devices, or any other medium that can be used to carry or store any program code in the form of instructions or data structures and can be accessed by a computer. Any connection is also properly called a computer-readable medium. For example, if software is transferred by a coaxial cable, an optical cable, a twisted pair, a digital subscriber line (DSL), or transferred from a website, a server or other remote sources by wireless technologies such as infrared, radio, and microwave, the coaxial cable, optical cable, and twisted pair, DSL, or the wireless technologies such as infrared, radio, and microwave are included in the definition of the medium. The disk (disk) and disc (disc) used herein include compressed disk (CD), laser disk, optical disk, digital versatile disc (DVD), floppy disk and Blu-ray disc, where the disk (disk) generally re-presents data in a magnetic form, and the disc (disc) re-presents data in an optical form by alaser. A combination thereof should also be included the scope of the computer-readable medium.

Prior description of this disclosure is provided in order to enable any person skilled in the art to make or use this disclosure. Various modifications made to this disclosure are apparent to a person skilled in the art, and general principles defined herein may be applied to other variants without departing from the spirit or scope of this disclosure. Therefore, this disclosure is not intended to being limited to the examples and design described herein, but shall meet the widest scope that matches the principles and novel features disclosed herein.

## Claims

1. A payment system, comprising a payment end, a consumer end, and an account management server, wherein
the payment end further comprises:
a signal modulation module, which modulates information required for payment into a transmission signal and sends the transmission signal to the consumer end;
the consumer end further comprises a signal receiving unit, and the signal receiving unit further comprises:
a signal conversion module, which converts the transmission signal sent by the payment end to the consumer end into an electric signal, and transmits the electric signal to the account management server;
the account management server further comprises:
a signal demodulation module, which receives the electric signal and performs demodulation to obtain the information required for payment.

2. The payment system according to claim 1, wherein the account management server further comprises:
a signal receiving unit management module, which stores a legal identifier of the signal receiving unit or information correlated with the identifier, compares the identifier and the information with an actual identifier of the signal receiving unit or actual correlated information that is uploaded by the consumer end, so as to determine whether a currently using signal receiving unit is legal.

3. The payment system according to claim 1, wherein the payment system further comprises:
a dynamic key apparatus, which provides a dynamic key for encryption and decryption at the payment end/consumer end.

4. The payment system according to claim 1, wherein
the consumer end further comprises a consumption encryption module, and the consumption encryption module is connected to a signal conversion module and encrypts a converted electric signal; and/or the payment end further comprises a payment encryption module, and the payment encryption module is connected to the signal modulation module and performs encryption before the information required for payment is modulated into the transmission signal; and
the account management server comprises a consumption decryption module, the consumption decryption module performs decryption first according to a decryption algorithm corresponding to an encryption algorithm of the consumption encryption module, and decrypted information is transmitted to the signal demodulation module for demodulation, and/or the account management server further comprises a payment decryption module, and the payment decryption module is connected to the signal demodulation module and decrypts the demodulated information according to a decryption algorithm corresponding to an encryption algorithm of the payment encryption module to obtain the information required for payment.

5. The payment system according to claim 1, wherein the payment end further comprises a payment scrambling module, and the payment scrambling module is connected before the signal modulation module, and performs scrambling before the information required for payment is modulated into the transmission signal; and the account management server further comprises a payment descrambling module, and the payment descrambling module is connected after the signal demodulation module, and performs descrambling on demodulated information.

6. The payment system according to claim 4, wherein
the payment end further comprises a payment scrambling module, and the payment scrambling module is connected before the payment encryption module to scramble the information required for payment before encryption, or the payment scrambling module is connected between the payment encryption module and the signal modulation module to scramble the information required for payment after encryption; and
the account management server further comprises a payment descrambling module, the payment descrambling module is connected after the payment description module, and performs descrambling after the demodulated information is decrypted, or the payment descrambling module is connected between the signal demodulation module and the payment decryption module, and performs descrambling before the demodulated information is decrypted.

7. The payment system according to claim 4, wherein the consumption encryption module encrypts the electric signal or encrypts the electric signal together with consumer end information.

8. The payment system according to claim 7, wherein the consumer end information comprises identification information of the signal receiving unit, or time information of the consumer end, or geographic location information of the consumer end, or any combination thereof.

9. The payment system according to any one of claims 1 to 6, wherein the account management server further comprises:
an account management module, which stores user information, payment account information or account correlation information of a payment account that is uploaded by the payment end, and sends an encrypted account identifier together with a key back to the payment end; or sends an encrypted account identifier back to the payment end, whereupon a key is generated at the payment end locally.

10. The payment system according to claim 9, wherein the payment system further comprises a payment processing server, the payment processing server is connected to the consumer end and the account management module and sends the information required for payment to the account management module, and the account management module finds corresponding payment account information or account correlation information of the payment account and then returns the information to the payment processing server, wherein the information required for payment is output by the consumer end; or
the payment processing server is connected to only the account management module, the information required for payment that is output by the consumer end is sent to the account management module, and the account management module finds the corresponding payment account information or account correlation information of the payment account and then returns the information to the payment processing server.

11. The payment system according to claim 10, wherein encryption and decryption are also performed between the account management module and the payment processing server, and between the payment processing server and the consumer end.

12. The payment system according to claim 9, wherein
the payment encryption module further encrypts information required in a payment phase, comprising: using a key to encrypt the information required in the payment phase.

13. The payment system according to claim 9, wherein the key comprises at least one of: a key used by the payment end to encrypt the information required for payment, a key used by the payment end to scramble the information required for payment, or a key used by the payment end to encrypt local information that needs to be stored.

14. The payment system according to claim 4, wherein the account management server further comprises:
a signal receiving unit management module connected to the consumption decryption module, which stores an identifier of the signal receiving unit or identifier-related information to determine whether a currently using signal receiving unit is legal.

15. The payment system according to claim 9 or 14, wherein the account management server further comprises:
a key update module, which generates a unique key each time, and delivers the key to the payment end/consumer end; or
generates a set of keys at a time, and selects at least one key each time according to an algorithm and delivers the key to the payment end/consumer end; or
generates a set of keys each time, and selects at least one of the keys each time according to an algorithm and delivers the key to the payment end/consumer end; or
generates a set of keys according to a preset rule and delivers the keys to the payment end/consumer end, whereupon the payment end/consumer end selects at least one key from the set of keys when needing to use the key, wherein the preset rule is generated periodically or generated after the Internet is accessed or generated after payment is made for a preset quantity of times.

16. The payment system according to claim 9, wherein a unique payment end/consumer end key is generated locally each time; or
a set of keys is generated at a time, and at least one of the keys is selected each time according to an algorithm; or
a set of keys is generated each time, and at least one of the keys is selected each time according to an algorithm; or
a set of keys is generated according to a preset rule, and then at least one key is selected from the set of keys, wherein the preset rule is generated periodically or generated after the Internet is accessed or generated after payment is made for a preset quantity of times.

17. A payment system, comprising a payment end, a consumer end, and an account management server, wherein
the payment end further comprises:
a signal modulation module, which modulates information required for payment into a transmission signal and sends the transmission signal to the consumer end;
the consumer end further comprises a signal receiving unit, and the signal receiving unit further comprises:
a signal conversion module, which converts the transmission signal sent by the payment end to the consumer end into an electric signal; and
a signal demodulation module, which further demodulates the electric signal to obtain the information required for payment.

18. The payment system according to claim 17, wherein the account management server further comprises:
a signal receiving unit management module, which stores a legal identifier of the signal receiving unit or information correlated with the identifier, compares the identifier and the information with an actual identifier of the signal receiving unit or actual correlated information that is uploaded by the consumer end, so as to determine whether a currently using signal receiving unit is legal.

19. The payment system according to claim 17, wherein the payment system further comprises:
a dynamic key apparatus, which provides a dynamic key for encryption and decryption at the payment end/consumer end.

20. The payment system according to claim 17, wherein
the consumer end further comprises a consumption encryption module, and the consumption encryption module is connected to a signal conversion module and encrypts a converted electric signal; and/or the payment end further comprises a payment encryption module, and the payment encryption module is connected to the signal modulation module and performs encryption before the information required for payment is modulated into the transmission signal; and
the account management server comprises a consumption decryption module, the consumption decryption module performs decryption first according to a decryption algorithm corresponding to an encryption algorithm of the consumption encryption module, and/or the consumer end further comprises a payment decryption module, which decrypts the demodulated information according to a decryption algorithm corresponding to an encryption algorithm of the payment encryption module to obtain the information required for payment, and/or the account management server further comprises a payment decryption module, and the payment decryption module is connected to the signal demodulation module and decrypts the demodulated information according to the decryption algorithm corresponding to the encryption algorithm of the payment encryption module to obtain the information required for payment.

21. The payment system according to claim 20, wherein
the payment end further comprises a payment scrambling module, and the payment scrambling module is connected before the payment encryption module to scramble the information required for payment before encryption, or the payment scrambling module is connected between the payment encryption module and the signal modulation module to scramble the information required for payment after encryption; and
the consumer end further comprises a payment descrambling module, the payment descrambling module is connected after the payment description module, and performs descrambling after the demodulated information is decrypted, or the payment descrambling module is connected between the signal demodulation module and the payment decryption module, and performs descrambling before the demodulated information is decrypted.

22. The payment system according to claim 20, wherein the consumption encryption module encrypts the electric signal or encrypts the electric signal together with consumer end information.

23. The payment system according to claim 22, wherein the consumer end information comprises identification information of the signal receiving unit, or time information of the consumer end, or geographic location information of the consumer end, or any combination thereof.

24. The payment system according to any one of claims 17 to 21, wherein the account management server comprises:
an account management module, which stores user information, payment account information or account correlation information of a payment account that is uploaded by the payment end, and sends an encrypted account identifier together with a key back to the payment end; or sends an encrypted account identifier back to the payment end, whereupon a key is generated at the payment end locally.

25. The payment system according to claim 24, wherein the payment system further comprises a payment processing server, the payment processing server is connected to the consumer end and the account management module and sends the information required for payment to the account management module, and the account management module finds corresponding payment account information or account correlation information of the payment account and then returns the information to the payment processing server, wherein the information required for payment is output by the consumer end; or
the payment processing server is connected to only the account management module, the information required for payment that is output by the consumer end is sent to the account management module, and the account management module finds the corresponding payment account information or account correlation information of the payment account and then returns the information to the payment processing server.

26. The payment system according to claim 25, wherein encryption and decryption are also performed between the account management module and the payment processing server, and between the payment processing server and the consumer end.

27. The payment system according to claim 24, wherein the payment encryption module further encrypts information required in a payment phase, comprising: using a key to encrypt the information required in the payment phase.

28. The payment system according to claim 24, wherein the key comprises at least one of: a key used by the payment end to encrypt the information required for payment, a key used by the payment end to scramble the information required for payment, or a key used by the payment end to encrypt local information that needs to be stored.

29. The payment system according to claim 20, wherein the account management server further comprises:
a signal receiving unit management module connected to the consumption decryption module, which stores an identifier of the signal receiving unit or identifier-related information to determine whether a currently using signal receiving unit is legal.

30. The payment system according to claim 24 or 28, wherein the account management server further comprises:
a key update module, which generates a unique key each time, and delivers the key to the payment end/consumer end; or
generates a set of keys at a time, and selects at least one key each time according to an algorithm and delivers the key to the payment end/consumer end; or
generates a set of keys each time, and selects at least one of the keys each time according to an algorithm and delivers the key to the payment end/consumer end; or
generates a set of keys according to a preset rule and delivers the keys to the payment end/consumer end, whereupon the payment end/consumer end selects at least one key from the set of keys when needing to use the key, wherein the preset rule is generated periodically or generated after the Internet is accessed or generated after payment is made for a preset quantity of times.

31. The payment system according to claim 24, wherein a unique payment end/consumer end key is generated locally each time; or
a set of keys is generated at a time, and at least one of the keys is selected each time according to an algorithm; or
a set of keys is generated each time, and at least one of the keys is selected each time according to an algorithm; or
a set of keys is generated according to a preset rule, and then at least one key is selected from the set of keys, wherein the preset rule is generated periodically or generated after the Internet is accessed or generated after payment is made for a preset quantity of times.

32. A chip legality verification apparatus, comprising:
an identifier collection module, which collects an actual identifier of a chip and uploads the actual identifier to a server;
an identifier management module, which stores a legal identifier of the chip in the server; and
a legality verification module, which is connected to the identifier collection module and the identifier management module, and compares the collected actual identifier with the legal identifier in the identifier management module to determine whether the chip is legal.
